# EUROPEAN PATENT SPECIFICATION

(11) **EP 3 493 681 B1**
(45) Date of publication and mention of the grant of the patent: **30.08.2023**
(21) Application number: 17836119.2
(22) Date of filing: 11.07.2017
(51) Int. Cl.: A01N 61/02, A01N 25/02, A01N 25/30, A01N 37/10, A01N 37/40, A01P 1/00, A01P 3/00, A01P 7/04

(54) **STABILIZED EMULSIONS**
STABILISIERTE EMULSIONEN
ÉMULSIONS STABILISÉES

(30) Priority: 04.08.2016 CA 2938096
(43) Date of publication of application: 12.06.2019
(73) Proprietor: Suncor Energy Inc., Calgary, Alberta T2P 3E3 (CA)
(72) Inventor: NASH, Brady, Dundas, Ontario L9H 3S6 (CA); LIU, Jun, Oakville, Ontario L6H 6H3 (CA); FEFER, Michael, Whitby, Ontario L1N 7A7 (CA)
(74) Representative: Peterreins Schley
(86) International application number: PCT/CA2017/050843
(87) International publication number: WO 2018/023193

(56) References cited:
- EP-A1- 1 426 029
- WO-A1-2005/029960
- CA-A1- 2 472 806
- CN-A- 101 239 066
- CN-A- 101 972 264
- JP-A- S51 148 039
- JP-A- 2009 120 549
- JP-A- 2009 120 549
- US-A- 4 559 157
- US-A1- 2005 261 379
- MOHAMED-SHATER MAHA ET AL: "Effect of Salicylic Acid and Benzoic Acid on Growth, Yield and Some Biochemical Aspects of Quinoa Plant Grown in Sandy Soil 1", INTERNATIONAL JOURNAL OF CHEMTECH RESEARCH, vol. 8, no. 12, 1 January 2015 (2015-01-01), pages 216-225, XP55756479,

## Description

### TECHNICAL FIELD

This disclosure relates to stabilized, ready-to-use, quick break emulsion compositions, and in particular, stabilized paraffinic spray oil compositions and methods of using these compositions for controlling plant pests such as harmful insects and fungi.

### BACKGROUND

Petroleum oils have long been sprayed on agricultural crops as a means of pest control. Properly processed petroleum oils are generally less phytotoxic than many less processed petroleum oils and synthetic pesticides, with the resulting oil cover affecting the target mites, flies, bugs, scales, aphids and the like but having little deleterious effect on the target tree, plant or crop. Conventional spray oils are manufactured from crude oil and petroleum fractions using conventional solvent refining techniques or using hydro-treated base oils. In most cases, immediately prior to their use, a concentrate composes of the oil and an emulsifier is added to water and mixed to form an emulsion that can be applied to plants.

US 2005261379 A1 relates to a paraffinic spray oil and a method of using the spray oil for controlling turfgrass pests. The spray oil comprises paraffinic oil and a quick break emulsifier, which is formulated as an oil-in-water (O/W) emulsion for use. The paraffinic oil and emulsifier are present in a weight ratio ranging from about 95:5 to about 99.95:0.05, and preferably from about 98.5: 1.5 to about 99.9:0.1. When applied to turfgrass, the O/W emulsion quickly releases the oil phase upon application to the turfgrass to contact pests thereon.

EP 1426029 A1 relates to emulsion compositions for improved long-term emulsion stability and feeling in use, and can be protected from putrefaction without an antiseptic such as paraben or with a lower amount of an antiseptic, if an antiseptic is used.

CN101972264 A relates to a method for preparing a miconazole nitrate- and hydrocortisone-containing medicinal cream. The cream comprises water phase of polyethylene glycol and glycerin monostearate, liquid wax or composition of the glycerin monostearate and liquid wax based on a certain proportion.

CN 101239066 A relates to a triamcinolone acetonide and econazole nitrate cream which contains econazole nitrate and triamcinolone acetonide. The invention is characterized in that the cream also contains octodecyl alcohol or hexadecanol.

US 4559157 A relates to cosmetic applicators comprising absorbent sheets impregnated with an oil-in-water emulsion incorporating various emollients which are adapted for moisturizing wet skin surfaces.

JP 2009120549 A relates to a pesticide composition containing an emulsion stabilizer selected from lactic acid, glycolic acid, citric acid, succinic acid, benzoic acid and their mixture, 2-(thiazol-4-ine)benzimidazole optionally in combination with a triazole-based fungicide component, a pyrethroidal insecticide component or a (thia)nicotinyl insecticide component or other insecticide components, a mixed solvent containing a glycol-based solvent and benzyl alcohol, and a surfactant.

JP S51148039A relates to a composition containing an alkyl p-oxybenzoate as an emulsion stabilizer for cosmetics.

### SUMMARY

Spray oils, such as paraffinic oils, are known to control insect and fungal pathogens. Such compositions are typically applied as an oil-in-water emulsion and can include 1 to 3 weight percent (wt %) of an emulsifier such as a quick break emulsifier. Generally speaking, a quick break emulsifier can be used to prepare the emulsion for application but is not intended to prevent the oil phase from separating from the water phase following application of the emulsion on the target pests or crops. An emulsion having, for example, a more stabilizing emulsifier or emulsifier concentration is not desired in the composition provided herein as such conditions can prevent the oil phase from quickly separating from the water after spraying such that the oil does not spread over the leaves and pests as desired, resulting in a loss of efficacy.

One problem with spray oil compositions having a quick break emulsifier, however, is that the oil-in-water emulsion breaks fairly quickly upon standing (e.g., over the course of a day) if continuous agitation is not provided. Also, following a break of the emulsion, it can become increasing difficult to reconstitute the emulsion. Eventually, the oil-in-water composition becomes unusable and must be disposed. It has been surprisingly found that product stability, shelf life, and performance can be significantly enhanced by the inclusion of one or more stabilizing agents (e.g., benzoic acid). Moreover, it has been discovered that the inclusion of one or more stabilizers not only extends the shelf-life of oil-in-water emulsion compositions by allowing reconstitution of the emulsion after storage, but oil-in-water compositions containing one or more stabilizers can exhibit little to no phytotoxicity when applied to plants and can also exhibit increased resistance to microbial growth (*i.e.,* growth of bacterial, mold, and yeast species).

Provided herein are sprayable oil-in-water quick break emulsion compositions, for application to a plant to control plant pests. The oil-in-water quick break emulsion composition comprising a paraffinic oil; an emulsifier comprising a block copolymer emulsifier, an alkyl polysaccharide emulsifier, a blend of a random polymeric emulsifier and a block copolymer emulsifier, a blend of a polyoxyethylene quaternary amine emulsifier and an alkyl glyceride emulsifier or a blend of an alcohol ethoxylate emulsifier and an alkyl glyceride emulsifier; 0.01% to about 0.25% by weight of a stabilizer selected from the group consisting of a benzoic acid, a benzoic acid salt, 2-aminobenzoate, 3-aminobenzoate, 4-aminobenzoate, a paraben, and mixtures of two or more thereof; and water.

In some embodiments, a composition provided herein comprises about 0.03% to about 0.1% by weight of the stabilizer. For example, the composition can include about 0.05% by weight of the stabilizer. In some embodiments, the stabilizer comprises a benzoic acid.

In some embodiments, a composition provided herein comprises less than about 2% by weight of the quick break emulsifier. For example, the composition can include less than about 0.5% by weight of the quick break emulsifier. In some embodiments, the composition comprises from about 0.01% to about 0.1% by weight of the quick break emulsifier.

In some embodiments, a composition provided herein comprises about 0.05% to about 5% by weight of the paraffinic oil. For example, the composition can include about 1% to about 3% by weight of the paraffinic oil. In some embodiments, the weight ratio of the paraffinic oil to the quick break emulsifier is from about 95:5 to about 99.95:0.05. For example, the paraffinic oil has a paraffin content of at least about 80%; at least about 90%; or at least about 99%. In some embodiments, the paraffinic oil is selected from the group consisting of paraffins, isoparaffins, and mixtures thereof. For example, the paraffinic oil can include a synthetic isoparaffin. In some embodiments, the paraffinic oil is N65DW.

In some embodiments, a composition provided herein exhibits reduced microbial growth as compared to a similarly formulated composition lacking the stabilizer.

In some embodiments, a composition provided herein causes little to no phytotoxicity following application of the composition to a plant. For example, the composition can cause no phytotoxicity following application of the composition to a plant.

Also provided herein is a method for stabilizing a quick break oil-in-water emulsion composition, for spray application to a plant to control plant pests. Stabilizing the quick break oil-in-water emulsion composition comprises allowing reconstitution of the emulsion after storage. The oil-in-water quick break emulsion composition comprises water, a paraffinic oil and an emulsifier comprising a block copolymer emulsifier, an alkyl polysaccharide emulsifier, a blend of a random polymeric emulsifier and a block copolymer emulsifier, a blend of a polyoxyethylene quaternary amine emulsifier and an alkyl glyceride emulsifier or a blend of an alcohol ethoxylate emulsifier and an alkyl glyceride emulsifier. The method further comprises adding to the quick break emulsion composition 0.01% to 0.1% by weight of a stabilizer selected from the group consisting of a benzoic acid, a benzoic acid salt, 2-aminobenzoate, 3-aminobenzoate, 4-aminobenzoate, a paraben, and mixtures of two or more thereof, wherein the oil-in-water quick break emulsion composition is stabilized by allowing reconstitution of the composition after storage.

In some embodiments, an emulsion composition provided herein is able to be reconstituted after a storage period of at least six months at 25°C. For example, the emulsion is stable for at least one year at 25°C; for at least two years at 25°C; or at least three years at 25°C.

In some embodiments, the composition comprises about 0.03% to 0.1% by weight of the stabilizer. For example, the composition can include about 0.05% by weight of the stabilizer. In some embodiments, the stabilizer comprises a benzoic acid.

In some embodiments, the comprises less than about 2% by weight of the quick break emulsifier. For example, the composition can include less than about 0.5% by weight of the quick break emulsifier. In some embodiments, the composition comprises from about 0.01% to about 0.1% by weight of the quick break emulsifier.

Further provided herein is a method for controlling a plant pest comprising applying to a plant a quick break oil-in-water emulsion composition according to the invention; wherein the plant pest is selected from the group consisting of an insect, a fungus, and a microorganism. In some embodiments, the oil-in-water emulsion quickly breaks upon application to the plant to release the paraffinic oil from the oil-in-water emulsion.

Unless otherwise defined, all technical and scientific terms used herein have the same meaning as commonly understood by one of ordinary skill in the art to which this invention belongs. Methods and materials are described herein for use in the present invention; other, suitable methods and materials known in the art can also be used. The materials, methods, and examples are illustrative only and not intended to be limiting. In case of conflict, the present specification, including definitions, will control.

Other features and advantages of the invention will be apparent from the following detailed description and figures, and from the claims.

### DESCRIPTION OF DRAWINGS

**FIG.** 1 is a photograph showing a milky emulsion resulting from the mixing of an oil-in-water emulsion composition containing 2 wt% emulsifier.
**FIG.** 2 is a photograph showing an oil-in-water emulsion composition with a rating of 10 (best).
**FIG.** 3 is a photograph showing an oil-in-water emulsion composition with a rating of 5.
**FIG.** 4 is a photograph showing an oil-in-water emulsion composition with a rating of 1 (worst).

### DETAILED DESCRIPTION

This disclosure provides stabilized oil-in-water emulsion compositions that include one or more stabilizers. In some embodiments, the compositions can be in the form of a single composition (e.g., a ready-to-use oil-in-water emulsion composition). Typically, such compositions are applied to a plant (e.g., vegetables or flowering plants) to control plant pests. For example, the compositions provided herein can be useful for controlling insects or diseases on plants.

### Compositions

Provided herein are oil-in-water emulsion compositions having a stabilizer. Without being bound by any theory, the stabilizer as provided herein is capable of facilitating reconstitution of the oil-in-water emulsion after standing without affecting the quick breaking properties of the emulsion upon application to a plant *(i.e.,* separation of the oil and water phases following contact with the plant). For example, the stabilizer allows the emulsion to be reconstituted upon shaking or other agitation (e.g., stirring or external agitation). In some embodiments, the emulsion can be reconstituted following about 5-30 seconds of shaking or other agitation (e.g., about 15 to about 30 seconds; about 10 to about 20 seconds; and about 30 seconds). The stabilizer can facilitate reconstitution of an oil-in-water emulsion as provided herein for up to six months at 25°C *(e.g.,* up to about nine months, up to about twelve months (1 year), up to about 18 months, up to about two years, and up to about three years). In some embodiments, the stabilizer is further able to act as an antimicrobial agent. For example, the stabilizer can slow or prevent the growth of bacteria, mold, and/or yeast species in the oil-in-water emulsion. In some embodiments, the stabilizer can be used in a composition provided herein without imparting additional risk for phytotoxicity to the plant (e.g., vegetables or flowering plants) upon which it is applied as compared to a similarly formulated oil-in-water emulsion lacking the stabilizer.

Accordingly, provided herein are methods for stabilizing an oil-in-water emulsion composition that includes the addition of a stabilizer as provided herein. In some embodiments, the stabilized oil-in-water emulsion composition exhibits reduced microbial growth. In some embodiments, the stabilized oil-in-water emulsion composition does not exhibit increased phytotoxicity as compared to a similarly formulated oil-in-water emulsion lacking the stabilizer. In some embodiments, an oil-in-water composition exhibits little or no phytotoxicity following application to a plant.

A "stabilizer" as used herein refers to a benzoic acid, a benzoic acid salt, an ester of benzoic acid, a benzoic acid derivative, a paraben, and mixtures thereof. According to the invention the stabilizer is selected from the group consisting of a benzoic acid, a benzoic acid salt, 2-aminobenzoate, 3-aminobenzoate, 4-aminobenzoate, a paraben and mixtures of two or more thereof. Non-limiting examples of benzoic acid salts include, but are not limited to, ammonium benzoate, sodium benzoate, potassium benzoate, calcium benzoate, lithium benzoate, magnesium benzoate, zinc benzoate, and the like.

In some embodiments, the stabilizer is a paraben, or a salt thereof. Parabens can include compounds having the structure: 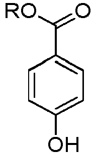 wherein R is a C₁₋₁₀ alkyl. Non-limiting examples of parabens include methylparaben, ethylparaben, propylparaben, isopropylparaben, butylparaben, isobutylparaben, and heptylparaben. In some embodiments, the paraben is present as a salt *(e.g.,* an ammonium salt, sodium salt, potassium salt, calcium salt, lithium salt, magnesium salt, zinc salt, etc.).

In some embodiments, the stabilizer is benzoic acid or a salt form thereof. In some embodiments, the stabilizer is benzoic acid.

Stabilizers are used in amounts ranging from 0.01% to 0.1% by weight of the oil-in-water emulsion composition. For example, a stabilizer can be used in amounts ranging from 0.01% to 0.1%; from about 0.01% to about 0.08%; from 0.01% to about 0.03%; from about 0.03% to 0.1%; or from about 0.025% to about 0.075% by weight of the emulsion composition. In some embodiments, the stabilizer is present in amounts from about 0.03 to 0.1% by weight of the emulsion composition. For example, the stabilizer can be present at about 0.05% by weight of the emulsion composition.

Oil-in-water emulsions as provided herein can include alkane rich streams, whether derived synthetically or through separation and hydroprocessing operations. Examples of hydroprocessing and derived products include streams rich in isoparaffins, cyclic paraffins and could include synthetic olefins also known as PAO, linear olefins, and others.

In some embodiments, the paraffinic oil includes an oil enriched in paraffin. In some embodiments, the paraffinic oil includes a paraffin having from 12 carbon atoms to 50 carbon atoms (e.g., 12 carbon atoms to 40 carbon atoms, 16 carbon atoms to 35 carbon atoms, 12 carbon atoms to 21 carbon atoms; *e.g.,* 16 carbon atoms to 35 carbon atoms).

In some embodiments, the paraffinic oil includes a paraffin having an average number of carbon atoms that is less than or equal to about 20 *(e.g.,* 16). In some embodiments, the paraffinic oil includes a paraffin having an average number of carbon atoms of from 16 to 30, *e.g.,* 23 or 27). In some embodiments, the paraffinic oil includes a paraffin having from 16 carbon atoms to 35 carbon atoms and an average number of carbon atoms of 23.

In some embodiments, the paraffin includes a paraffin, an isoparrafin, or mixtures thereof. In some embodiments, the paraffin is (or includes) an isoparaffin (e.g., a synthetic isoparaffin manufactured from two-stage Severe Hydrocracking/Hydroisomerization process).

In some embodiments, a paraffin is present in the paraffinic oil in an amount that is at least 80% *(e.g.,* at least 90%, at least 95%, at least 99%).

In some embodiments, the paraffinic oil has been refined to remove compounds that are associated with plant injury, for example, aromatic compounds or compounds containing sulfur, nitrogen, or oxygen. In some embodiments, the paraffinic oil includes relatively low levels of aromatic compounds and/or compounds containing sulfur, nitrogen, or oxygen, *e.g*., less than 10 weight percent (less than 5 weight percent, less than 2 weight percent, less than 0.5 weight percent) of aromatic compounds and/or compounds containing sulfur, nitrogen, or oxygen.

Non-limiting examples of suitable paraffinic oils include, HT60, HT100, High Flash Jet, LSRD, and N65DW (available from Petro-Canada Inc., Mississuaga, ON, Canada, a Suncor Energy business). In some embodiments, the paraffinic oil is N65DW.

In some embodiments, the oil-in-water emulsion compositions provided herein can include from about 0.5% to about 5% by weight of one or more paraffinic oils. For example, from about 0.5% to about 4%, from about 0.5% to about 3.5%, from about 0.5% to about 3%, from about 0.5% to about 2.5%, from about 0.5% to about 2%, from about 0.5% to about 1.5%, from about 0.5% to about 1%, from about 0.75% to about 5%, from about 1% to about 5%, from about 1.5% to about 5%, from about 2% to about 5%, from about 2.5% to about 5%, from about 3% to about 5%, from about 4% to about 5%, from about 0.75% to about 2.25%, from about 1% to about 3%, from about 1.5% to about 2.5%, and from about 1% to about 2% by weight of the oil-in-water composition. In some embodiments, the oil-in-water compositions include from about 1.5% to about 2.5% by weight of one or more paraffinic oils. For example, the oil-in-water compositions can include about 2% by weight of one or more paraffinic oils.

The oil-in-water emulsions provided herein further include one or more emulsifiers. Emulsions tend to be thermodynamically unstable due to excess free energy associated with the surface of the dispersed droplets such that the particles tend to flocculate (clumping together of dispersed droplets or particles) and subsequently coalesce (fusing together of agglomerates into a larger drop or droplets) to decrease the surface energy. If these droplets fuse, the emulsion will "break" (*i.e.,* the phases will separate) destroying the emulsion, which in some cases can be detrimental to the storage shelf-life of the compositions. While not wishing to be bound by any theory, it is believed that the addition of one (or more) emulsifying agents or emulsifiers can prevent or slow the "breaking" of an emulsion. As the skilled artisan will appreciate, the type and concentration of a particular emulsifying agent will depend, *inter alia,* on the emulsion phase components and the desired result.

According to the invention, the emulsifier is a "fast break" or "quick break" emulsifier. While not wishing to be bound by any theory, it is believed that a "fast break" or "quick break" emulsifier allows the paraffinic oil to be quickly released from the oil-in-water emulsion upon application to the plant for contact, *e.g.,* a plant having a plant pest. When a "fast break" or "quick break" emulsifier is present in a suitable amount (for example a selected proportion or ratio with respect to the paraffinic oil), the resulting "fast break" or "quick break" oil-in-water emulsion quickly releases the oil phase upon application to the plant (e.g., flowering and foliage plants). As such, there is less runoff of the oil-in-water emulsion from, *e.g.,* the leaf blades (as compared to more stable oil-in-water emulsions) resulting in more oil adhering to the plant for a longer period of time to more effectively contact and control the associated pests (e.g., insects or fungal pathogens). In some embodiments, the oil phase resides on the plant for a period of not less than one hour. In some embodiments, the oil phase resides on the plant for a period of from not less than 1 hour but not more than 30 days.

According to the invention, the emulsifier comprises a block copolymer emulsifier, an alkyl polysaccharide emulsifier, a blend of a random polymeric emulsifier and a block copolymer emulsifier, a blend of a polyoxyethylene quaternary amine emulsifier and an alkyl glyceride emulsifier or a blend of an alcohol ethoxylate emulsifier and an alkyl glyceride emulsifier. Further optional emulsifiers may be one or more of a natural or synthetic alcohol ethoxylate, an alcohol alkoxylate, an alkyl polysaccharide, a glycerol oleate, a polyoxyethylene-polyoxypropylene block copolymer, an alkyl phenol ethoxylate, a polymeric surfactant, a polyethylene glycol, a sorbitan fatty acid ester ethoxylate, or any combination thereof. For example, the emulsifier includes one or more of a natural or synthetic alcohol ethoxylate, a glycerol oleate, or a combination thereof.

In some embodiments, the emulsifier includes a natural or synthetic alcohol ethoxylate, a polymeric surfactant, a sorbitan fatty acid ester, or any combination thereof.

In some embodiments, the natural or synthetic alcohol ethoxylate is a polyoxyethylene (4 to 12) lauryl ether (C12), polyoxyethylene (10) cetyl ether (C16), polyoxyethylene (10) stearyl ether (C18), polyoxyethylene (10) oleyl ether (C18 monounsaturated), a polyoxyethylene (2 to 11) C12-C15 alcohol, a polyoxyethylene (3 to 9) C11-C14 alcohol, a polyoxyethylene (9) C12-C14 alcohol, a polyoxyethylene (11) C16-C18 alcohol, a polyoxyethylene (20) C12-C15 alcohol, or any combination thereof. For example, the natural or synthetic alcohol ethoxylate can be a polyoxyethylene (4 to 7) lauryl ether (C12), polyoxyethylene (10) cetyl ether (C16), a polyoxyethylene (2 to 11) C12-C15 alcohol, a polyoxyethylene (3 to 9) C11-C14 alcohol, a polyoxyethylene (9) C12-C14 alcohol, or any combination thereof. As another example, the alcohol alkoxylate can be a butyl ether polyoxyethylene/polyoxypropylene block copolymer. In some embodiments, the natural or synthetic alcohol ethoxylate is a polyoxyethylene (4 to 12) lauryl ether (C12).

In some embodiments, the emulsifier includes an alkyl polysaccharide, *e.g.,* a C8-C11 alkylpolysaccharide or any combination thereof.

In some embodiments, the emulsifier includes a glycerol oleate, *e.g.,* a glycerol mono-, di-, tri-oleate, or any combination thereof. In some embodiments, the glycerol oleate is (or includes) a mono- or di-oleate, or a combination thereof.

In some embodiments, the emulsifier includes a polyoxyethylene-polyoxypropylene block copolymer, *e.g*., a polyoxyethylene-polyoxypropylene block copolymer having a molecular weight (or relative molar mass) of from 1100 to about 11400 and 10 to 80% (ethylene oxide) EO.

In some embodiments, the emulsifier includes an alkyl phenol ethoxylate, *e.g.,* a nonyl phenol ethoxylate, a dodecyl phenol ethoxylate, or any combination thereof. For example, the nonyl phenol ethoxylate can be a polyoxyethylene (2 to 8) nonylphenol.

In some embodiments, the emulsifier includes a polymeric surfactant, *e.g.,* a graft copolymer, a random copolymer, or any combination thereof. For example, the graft copolymer can be a polymethacrylic acid and acrylate with polyoxyethylene chains. For example, the random copolymer can be a random copolymer having ester and ether groups.

In some embodiments, the emulsifier includes a polyethylene glycol, *e.g.,* a polyethylene glycol having a molecular weight ("MW") (or relative molar mass) of from 200 to 8000, *e.g.,* MW 400 PEG dioleate; or MW600 PEG dioleate.

In some embodiments, the emulsifier includes a sorbitan fatty acid ester ethoxylate, *e.g*., polyoxyethylene (20) sorbitan tristearate, polyoxyethylene (20) sorbitan monooleate, polyoxyethylene (5) sorbitan monooleate, polyoxyethylene (20) sorbitan trioleate, or any combination thereof. For example, the sorbitan fatty acid ester can be a sorbitan tristearate, a sorbitan triolate, or any combination thereof.

In some embodiments, the emulsifier includes an alkyl phenol ethoxylate, a mixture of an ethoxylated alcohol and a glycerol oleate, or any combination thereof.

In some embodiments, the emulsifier includes a mixture of an ethoxylated alcohol and a glycerol oleate, for example, a C10 to C16 alcohol ethoxylate and a glycerol oleate combination; or polyoxyethylene lauryl ether, C10 to C16 alcohol ethoxylates, and glycerol oleate; or ethoxylated alcohols having primary C5-C20 carbon chains with an average of about 2 to about 7 ethoxylation groups, and a glycerol oleate; or a polyoxyethylene (11) C16-18 alcohol. In some embodiments, the emulsifier includes a polyoxyethylene lauryl ether and glycerol oleate (see, *e.g.,* US Patent Nos. 6,673,360 and 6,515,301).

In some embodiments, the emulsifier includes a sorbitan tristearate.

Non-limiting examples of suitable emulsifiers include ATMER 1010-SS-(AP) (available from Croda Inc), Brij L4-LQ-(AP) (available from Croda Inc), PC Emuls Green (available from Petro-Canada, Mississauga, ON, Canada), Lutensol^{™} AT1 1 (available from BASF), SPAN65 (available from Croda Inc), and S-MAZ^{™}65K (available from BASF). In some embodiments, the emulsifier is ATLOX^{™} AL-3273-LQ-(AP) (available from Croda Inc.). In some embodiments, the emulsifier is a combination of SYNPERONIC PE/F 127 and ATLOX 4914 (both from Croda Inc.).

In some embodiments, the emulsifier is a blend of alcohol ethoxylates and alkyl glycerides. In some embodiments, the emulsifier includes a polyalkylene oxide block copolymer, a random polymeric, or a combination thereof.

In some embodiments, the oil-in-water emulsion compositions provided herein include two or more emulsifiers (e.g., two emulsifiers, three emulsifiers, four emulsifiers, etc.).

In some embodiments, the oil-in-water emulsion compositions provided herein include less than about 2% by weight of an emulsifier. In some embodiments, the oil-in-water emulsion compositions include less than about 0.5% by weight of the emulsifier. In some embodiments, an oil-in-water emulsion composition includes from about 0.01% to about 0.1% by weight of the emulsifier. For example, from about 0.01% to about 0.8%, from about 0.01% to about 0.6%, from about 0.01% to about 0.05%, from about 0.01% to about 0.03%, from about 0.02% to about 0.1%, from about 0.03% to about 0.1%, from about 0.04% to about 0.1%, from about 0.05% to about 0.1%, from about 0.07% to about 0.1%, from about 0.08% to about 0.1%, from about 0.02% to about 0.06%, from about 0.03% to about 0.05%, from about 0.2% to about 0.8%, or from about 0.4% to about 0.7% by weight. In some embodiments, an oil-in-water emulsion composition includes from about 0.03% to about 0.05% by weight *(e.g.,* 0.04% by weight) of an emulsifier.

In some embodiments, the oil-in-water emulsion compositions provided herein include less than about 2% by weight of a quick break emulsifier. In some embodiments, the oil-in-water emulsion compositions include less than about 0.5% by weight of a quick break emulsifier. In some embodiments, an oil-in-water emulsion composition includes from about 0.01% to about 0.1% by weight of a quick break emulsifier. For example, from about 0.01% to about 0.8%, from about 0.01% to about 0.6%, from about 0.01% to about 0.05%, from about 0.01% to about 0.03%, from about 0.02% to about 0.1%, from about 0.03% to about 0.1%, from about 0.04% to about 0.1%, from about 0.05% to about 0.1%, from about 0.07% to about 0.1%, from about 0.08% to about 0.1%, from about 0.02% to about 0.06%, from about 0.03% to about 0.05%, from about 0.2% to about 0.8%, or from about 0.4% to about 0.7%. In some embodiments, an oil-in-water emulsion composition includes from about 0.03% to about 0.05% by weight *(e.g.,* 0.04% by weight) of a quick break emulsifier.

The paraffin oil and emulsifier are present in a weight ratio of oil: emulsifier ranging from about 95:5 to 99.95:0.05. For example, from about 98.5:1.5 to 99.9:0.1 (e.g., about 98:2).

Water is added to the oil-in-water emulsion compositions in an amount needed to bring the composition to 100% by weight. In some embodiments, an oil-in-water emulsion composition provided herein includes from about 85 to about 99.5% by weight water. For example, from about 85% to about 97%, from about 85% to about 95%, from about 85% to about 92%, from about 85% to about 90%, from about 85% to about 88%, from about 88% to about 99.5%, from about 90% to about 99.5%, from about 94% to about 99.5%, from 95% to about 99.5%, about 96% to about 99.5%, from about 97% to about 99.5%, from about 96% to about 98%, from about 94% to about 98%, from about 92% to about 96%, from about 95% to about 98%, or from about 90% to about 95%%. In some embodiments, an oil-in-water emulsion composition includes from about 95% to about 99% by weight water. For example, about 96% to about 98% by weight.

In some embodiments, the water component is distilled water or other such water having a low mineral electrolyte content.

The oil-in-water emulsion compositions can also include one or more components which are compatible customary additives or adjuvants for plant (*e.g.,* flowering plant, vegetable plant, or fruit tree) protection. These include, for example, dispersants, wetters, thickeners, organic solvents, cosolvents, antifoams, carboxylic acids, preservatives, and the like. Although not required, chemical pesticides and herbicides can also be included in the emulsions.

In some embodiments, the compositions do not include one or more other components that are customary additives or adjuvants for the preparation of compositions in the field of plant protection and/or components that are inert (e.g., may not materially affect the activity and/or overall performance of the compositions) and/or one or more other active components (e.g., other chemical pesticides).

In some embodiments, the compositions are free of one or more other components that are customary additives or adjuvants for the preparation of compositions in the field of plant protection *(e.g.,* field crop plants, trees, and vegetables) and/or components that are inert (e.g., may not materially affect the activity and/or overall performance of the compositions) and/or one or more other active components (e.g., other chemical fungicides, pesticides, or insecticides such as synthetic chemical fungicides, pesticides, or insecticides). For example, the compositions contain less than 5%, less than 4%, less than 3%, less than 2%, less than 1% (w/w or w/v) of one or more other components that are customary additives or adjuvants for the preparation of compositions in the field of plant protection *(e.g.,* field crop plants, trees, and vegetables) and/or components that are inert (e.g., may not materially affect the activity and/or overall performance of the compositions) and/or one or more other active components *(e.g.,* other chemical fungicides such as synthetic chemical fungicides).

In some embodiments, the compositions are substantially free of one or more other components that are customary additives or adjuvants for the preparation of compositions in the field of plant protection and/or components that are inert (e.g., may not materially affect the activity and/or overall performance of the compositions) and/or one or more other active components (e.g., other chemical fungicides, pesticides, or insecticides such as synthetic chemical fungicides, pesticides, or insecticides). For example, the compositions contain less than 0.5%, less than 0.2, less than 0.1, less than 0.05% (w/w or w/v), do not include a detectable amount of one or more other components that are customary additives or adjuvants for the preparation of compositions in the field of plant protection and/or components that are inert (e.g., may not materially affect the activity and/or overall performance of the compositions) and/or one or more other active components (e.g., other chemical fungicides, pesticides, or insecticides such as synthetic chemical fungicides, pesticides, or insecticides).

The terms free and substantially free as used with other components have the meanings provided above.

In some embodiments, the oil-in-water emulsion compositions provided herein are in the form of a single composition (e.g., a ready-to-use composition having all components contained within a storage pack or a vessel suitable for applying the composition to a plant, *e.g*., flowering or foliage plant).

In some embodiments, the stabilized oil-in-water emulsion may be, for example, an oil in water emulsion having an oil phase that is reconstituted in 0.5 to 15 minutes according to the following test:
1. Thoroughly mix oil in water emulsion.
2. Transfer 100 ml of oil in water emulsion to 100 mL graduated cylinder.
3. Let stand for 15 minutes to allow foam generated in step 1 to dissipate.
4. Invert graduated cylinder 10 times.
5. Using a stop watch and human observation, measure how long it takes for the oil phase to reconstitute after inversion (step 3).

In some embodiments, the oil phase is reconstituted in from about 2 minutes to about 5 minutes according to the test described above. In some instances, a "fast break" or "quick break" emulsifier is used in the composition and the "fast break" or "quick break" property of the oil-in-water emulsion is balanced with the need to provide an oil-in-water emulsion with a suitable shelf life under suitable storing conditions, and for a suitable timeframe.

The oil-in-water emulsion compositions include:
(i) one or more stabilizers as described above.
(ii) one or more paraffinic oils as described above;
(iii) water
(iv) one or more emulsifiers as described above; and optionally
(v) one or more components as described above.

In some embodiments, the oil-in-water emulsion compositions include (i), (ii), (iii), (iv), and (v).

In some embodiments, the oil-in-water emulsion compositions include:

| | |
|---|---|
| Paraffinic oil | about 1.5 % to about 2.5% by weight |
| Emulsifier | about 0.02% to about 0.06% by weight |
| Stabilizer | about 0.03% to 0.1% by weight |

In some embodiments, the oil-in-water emulsion compositions include:

| | |
|---|---|
| Paraffinic oil | about 2% by weight |
| Emulsifier | about 0.04% by weight |
| Stabilizer | about 0.05% by weight |

In certain implementations, the water can be present in a range from about 94.5% to about 99.5% by weight, about 97% to about 98.5% by weight, or about 98% by weight.

Oil-in-water (O/W) emulsions as described herein can be prepared using any suitable method. For example, emulsion compositions can be prepared by mixing the components using a paddle mixer under low shear conditions for a period of several minutes or until the solution becomes milky white. In some embodiments, an emulsion composition can be prepared by mixing the components using a homogenizer under high shear conditions for several minutes until the solution becomes a uniform, milky white. For example, this method can be used when incorporating polymeric emulsifiers into the composition. In some embodiments, heat can be applied to the solution during mixing.

### Methods of Use

To control plant pests, a stabilized oil-in-water emulsion according to the invention is applied to the plant to provide an oil dosage that is sufficient to effectively control plant pests (e.g.,insects and fungal diseases). The composition may also be reapplied as required.

In some embodiments, an oil-in-water emulsion composition is applied at a rate of at least about 121.6 L/ha (13 gal/acre), for example, a rate ranging from about 121.6 L/ha (13 gal/acre) to about 7015.5 L/ha (750 gal/acre), or from about 467.7 to 1403.1 L/ha (50 to about 150 gal/acre). In some embodiments, the most effective treatment for a specific application will generally depend on the type of plant, the type of pest(s), the level of infestation and the environmental conditions and may be readily determined by established biological tests known to those skilled in the art.

The oil-in-water emulsion compositions can be applied to the plant by spraying, misting, sprinkling, pouring, or any other suitable method for achieving the desired result. According to the invention, the oil-in-water emulsion composition is applied by spray methods. For example, the oil-in-water emulsion may be applied using a standard spray apparatus, in which case the droplet size, pressure and volume delivered may be suitably adjusted for a particular application.

When used as described herein, the oil-in-water emulsion compositions provided herein are effective in controlling a variety of plant pests. Optimal control is achieved by adjusting the timing of the application and dosage so as to target the plant pest(s) when it is most vulnerable, such as during egg or crawler stages.

Importantly, despite the application of high dosages of the oil-in-water emulsion composition to plants, the composition has little or no perceptible phytotoxic effect. Furthermore, the inventors have observed that the treated plant has a pleasant residual luster and, with the exception of oil-in-water emulsion compositions with a high C40 or greater carbon content, the plant is not greasy or oily to the touch.

### Definitions

For the terms "for example" and "such as," and grammatical equivalences thereof, the phrase "and without limitation" is understood to follow unless explicitly stated otherwise. As used herein, the singular forms "a," "an," and "the" include plural referents unless the context clearly dictates otherwise.

As used herein, the term "oil-in-water emulsion" refers to a mixture in which one of the oil *(e.g.,* paraffinic oil) and water is dispersed as droplets in the other *(e.g.,* the water). In some embodiments, an oil-in-water emulsion is prepared by a process that includes combining oil *(e.g.,* paraffinic oil), water, and any other components and applying shear until the emulsion is obtained. Typically a white milky color is indicative of the formation of an emulsion.

As used herein, the term "stabilized composition" refers to an oil-in-water emulsion composition containing one or more stabilizers as provided herein, wherein the oil-in-water emulsion can be reconstituted after standing (e.g., readily reconstituted upon shaking or other agitation (e.g., stirring or external agitation)).

The compositions provided herein can be applied to a number of different plants including plants and trees. In some embodiments, a plant includes one or more of crop plants, flowering plants, and fruit plants.

As used herein, the term "crop plant" refers to a non-woody plant, which is grown, tended to, and harvested in a cycle of one year or less as a source of foodstuffs and/or energy. Examples of crop plants include, without limitation, sugar cane, wheat, rice, corn (maize), potatoes, sugar beets, barley, sweet potatoes, cassava, soybeans, tomatoes, and legumes (beans and peas).

As used herein, the term "tree" refers to a woody perennial plant having a single stem or trunk and bearing lateral branches at some distance from the ground. In certain embodiments, the tree is deciduous. In other embodiments, the tree is evergreen (e.g., coniferous). In still other embodiments, the tree is deciduous or evergreen and is grown, tended to, and harvested in a cycle of one year or less as a source of foodstuffs. Examples of trees include, without limitation, maple trees, fruit trees such as citrus trees, apple trees, and pear trees, an oak tree, an ash tree, a pine tree, and a spruce tree.

In a further embodiment, a plant, as used herein, is a shrub.

In some embodiments, the plant is a fruit or nut plant. Non-limiting examples of such plants include: acerola (barbados cherry), atemoya, carambola (star fruit), rambutan, almonds, apricots, cherries, nectarines, peaches, pistachio, apples, avocados, bananas, platains, blueberries, bushberries, caneberries, raspberries, figs, grapes, mango, olives, papaya, pears, pineapple, plums, strawberries, grapefruit, lemons, limes, oranges (e.g., navel and valencia), tangelos, tangerines, mandarins.

In some embodiments, the plant is a vegetable plant. Non-limiting examples of such plants include: asparagus, bean, beets, broccoli, Chinese broccoli, broccoli raab, brussels sprouts, cabbage, cauliflower, Chinese cabbage (e.g., bok choy and mapa), Chinese mustard cabbage (gai choy), cavalo broccoli, collards, kale, kohlrabi, mizuna, mustard greens, mustard spinach, rape greens, celery, chayote, Chinese waxgourd, citron melon, cucumber, gherkin, hyotan, cucuzza, hechima, Chinese okra, balsam apple, balsam pear, bitter melon, Chinese cucumber, true cantaloupe, cantaloupe, casaba, crenshaw melon, golden pershaw melon, honeydew melon, honey galls, mango melon, Persian melon, pumpkin, summer squash, winter squash, watermelon, dasheen (taro), eggplant, ginger, ginseng, herbs and spices (e.g., curly leaf basil, lemon balm, cilantro, Mexican oregano, mint), Japanese radish (daikon), lettuce, okra, peppers, potatoes, radishes, sweet potatoes, Chinese artichoke (Japanese artichoke), corn and tomatoes.

In some embodiments, the plant is a flowering plant such as a roses, flowering shrubs, and ornamentals. Non-limiting examples of such plants include: flowering and foliage plants including roses and other flowering shrubs, foliage ornamentals & bedding plants, non-fruit - bearing trees such as apple, cherry, peach, pear, shade trees, ornamental trees, shrubs (e.g., conifers, deciduous and broadleaf evergreens & woody ornamentals).

In some embodiments, the plant is a houseplant. Non-limiting examples of such plants include: chrysanthemum, dieffenbachia, dracaena, ferns, gardenias, geranium, jade plant, palms, philodendron, and schefflera.

In some embodiments, the plant is a plant grown in a greenhouse. Non-limiting examples of such plants include: ageratum, crown of thorns, dieffenbachia, dogwood, dracaena, ferns, ficus, holly, lisianthus, magnolia, orchid, palms, petunia, poinsettia, schefflera, sunflower, aglaonema, aster, azaleas, begonias, browallia, camellias, carnation, celosia, chrysanthemum, coleus, cosmos, crepe myrtle, dusty miller, easter lilies, fuchsia, gardenias, gerbera, hellichrysum, hibiscus foliage, hydrangea, impatiens, jade plant, marigold, new guinea, impatiens, nicotonia, philodendron, portulaca, reiger begonias, snapdragon, and zinnias.

As used herein, the terms "plant pest" or "pest" generally refer to living organisms occurring on plants that are not desired to occur on those plants or that cause damage to the plants. Plant pests include but are not limited to insects (adult and larval forms), fungi, and microorganisms such as bacteria and viruses, and are particularly contemplated to include those provided in Table 1.

**Table 1. Exemplary plants and their associated pests**

| **CROP** | **EXEMPLARY PESTS** |
|---|---|
| ACEROLA (Barbados Cherry) | Aphids, Mites, Beetle Larvae, Leafminers, Thrips, Leafhopper, Whitefly, Caterpillars, Alternaria Leafspot, Gummy Stem Blight, Powdery Mildew, Rust, Cucumber Mosaic Virus, Papaya Ringspot Virus, Pepper Mottle Virus, Potato Leafroll Virus, Potato Virus Y, Tobacco Etch Virus, Watermelon Mosaic Virus 2, Zucchini Yellow Mosaic |
| ATEMOYA | |
| CARAMBOLA (Star Fruit) | |
| RAMBUTAN | |
| ALMONDS | Black Scale, European Fruit Lecanium Scale, Frosted Scale, Olive Scale, San Jose Scale, Brown Mite Eggs, European Red Mite Eggs, Aphid Eggs, Fruit Tree Leafroller (Eggs), Wintering Phytocoris (only on pistachio), Tent Caterpillars, Powdery Mildew (Cherries, Nectarines and Peaches only) Scales, Two-spotted Spider Mite, Pacific Mite, European Red Mite, Brown Mite, White Peach Scale |
| APRICOTS | |
| CHERRIES | |
| NECTARINES | |
| PEACHES | |
| PISTACHIO | |
| APPLES | European Fruit Lecanium Scale, Olive Scale, San Jose Scale, European Red Mite Eggs, Rust Mite, Rosy Apple Aphid Eggs, Apple Aphid Eggs Codling Moth, Leafroller (red banded, oblique, fruit tree), Apple Red Bug, Scurfy Scale, European Red Mite, Bud Moth, Light Brown Apple Moth, Red Bug San Jose Scale, Forbes Scale, Powdery Mildew, Scales, Mites including: Two Spotted Spider Mite, Pacific Red Mite, European Red Mite, Rust Mite, Leafhopper, San Jose Scale, Rosy Apple Aphid, Fruit Tree Leafroller |
| AVOCADOS | Avocado Brown Mite, Thrips, Persea Mite |
| BANANAS | Black Leaf Streak *(Mycosphaerella fijiensis),* Black Sigatoka *(Mycosphaerella fijiensis var. difformis),* |
| PLANTAINS | |
| | Yellow Sigatoka *(Mycosphaerella musicola)* |
| BLUEBERRIES | Mites, Powdery Mildew, Rust, Sawfly (eggs), Scales Aphids, Mealybug |
| BUSHBERRIES | |
| CANEBERRIES | |
| RASPBERRIES | |
| FIGS | Fig Scale, Mites, Mealybug, Scale |
| GRAPES | Mealybug, Mites, Leafhopper, Whiteflies, Powdery Mildew, Botrytis |
| MANGO | Mites, Powdery Mildew |
| OLIVES | Olive (Parlatoria) Scale, Oleander Scale, Black Scale, Mites |
| PAPAYA | Mites, Powdery Mildew, Papaya Ringspot Virus |
| PEARS | European Fruit Lecanium Scale, Olive Scale, San Jose Scale, European Red Mite Eggs, Pear Psylla, Codling Moth, Fruit Tree Leafroller, Pear Leaf Blister Mite, Powdery Mildew, Scales, Two Spotted Spider Mite, Pacific Red Mite, European Red Mite, San Jose Scale and Italian Pear Scale (Summer forms) Leafhopper, Pear Psylla |
| PINEAPPLE | Mealybugs, Bud Moth, Chinese Rose Beetle |
| PLUMS | Black Scale, European Fruit Lecanium Scale, Frosted Scale, Olive Scale, San Jose Scale, Brown Mite Eggs, European Red Mite Eggs, Aphid Eggs, Fruit Tree Leafroller Eggs, Tent Caterpillars, Two-spotted Spider Mite, Pacific Mite, European Red Mite, Brown Mite |
| STRAWBERRIES | Aphids, Botrytis, Leafminers, Mites, Powdery Mildew, Sawfly, Scale, Whiteflies |
| GRAPEFRUIT | Mites: Citrus Bud, Citrus Flat, Citrus Red, Citrus Rust |
| LEMONS | |
| LIMES | Scales: Black, Brown Soft, California Red, Citricola, Purple, Yellow, Red |
| ORANGES (Navel & Valencia) | |
| TANGELOS | |
| TANGERINES | |
| Other citrus hybrids | |
| CITRONS | Citrus Rust Mite, Spider Mites, Bud Mites, Flat Mites, Scales: Black Soft, Brown Soft, Chaff, Glover, Purple, Red, Yellow |
| GRAPEFRUITS | |
| LEMONS | |
| LIMES | Whitefly, Blackfly, Greasy Spot, Loosening sooty mold |
| MANDARINS | |
| ORANGES | |
| TANGELOS | |
| TANGERINES | |
| Other citrus hybrids | |
| ASPARAGUS, BEANS, BEETS, BROCCOLI, CHINESE BROCCOLI, BROCCOLI RAAB, BRUSSELS SPROUTS, CABBAGE, CAULIFLOWER, CHINESE CABBAGE (Bok Choy and Mapa), CHINESE MUSTARD CABBAGE (Gai Choy), CAVALO BROCCOLI, COLLARDS, KALE, KOHLRABI, MIZUNA, MUSTARD GREENS, MUSTARD SPINACH, RAPE GREENS, CELERY, CHAYOTE, CHINESE WAXGOURD, CITRON MELON, CUCUMBER, GHERKIN, HYOTAN, CUCUZZA, HECHIMA, CHINESE OKRA, BALSAM APPLE, BALSAM PEAR, BITTER MELON, CHINESE CUCUMBER, TRUE CANTALOUPE, CANTALOUPE, CASABA, CRENSHAW MELON, GOLDEN PERSHAW | Aphids, Mites, Beetle Larvae, Leafminers, Thrips, Leafhopper, Whitefly, Alternaria Leafspot, Gummy Stem Blight, Powdery Mildew, Rust, Cucumber Mosaic Virus, Papaya Ringspot Virus, Pepper Mottle Virus, Potato Leafroll Virus, Potato Virus Y, Tobacco Etch Virus, Watermelon Mosaic Virus 2, Zucchini Yellow Mosaic. |
| MELON, HONEYDEW MELON, HONEY GALLS, MANGO MELON, PERSIAN MELON, PUMPKIN, SUMMER SQUASH, WINTER SQUASH, WATERMELON, DASHEEN (Taro), EGGPLANT, GINGER, GINSENG, HERBS AND SPICES (Curly Leaf Basil, Lemon Balm), JAPANESE RADISH (Daikon), LETTUCE, OKRA, PEPPERS, POTATOES, RADISHES, SWEET POTATOES | |
| CHINESE ARTICHOKE (Japanese Artichoke) | Aphids, Mites, Beetle Larvae, Leafminers, Thrips Leafhopper, Whitefly, Alternaria Leafspot, Gummy Stem Blight, Powdery Mildew, Rust, Pepper Psyllids, Cucumber Mosaic Virus 2, Papaya Ringspot Virus, Pepper Mottle Virus, Potato Leafroll Virus, Potato Virus Y, tobacco Etch Virus, Watermelon Mosaic Virus 2, Zucchini Yellow Mosaic Virus |
| CILANTRO | |
| HERBS AND SPICES (Mexican Oregano, Mint) | |
| CORN (Sweet) | Aphids, Mites, Leafhopper, Leafminers, Corn Earworm, Rootworm, Armyworm, Whitefly, Cercospora |
| TOMATOES | Aphids, Mites, Beetle Larvae, Leafminers, Thrips, Leafhopper, Whitefly, Alternaria Leafspot, Gummy Stem Blight, Powdery Mildew, Rust, Tomato Psyllid, Tomato Pin Worm, Fruit Worm, Army Worm, Horn Worm, Lygus Bug, Stink Bug, Cucumber Mosaic Virus, Papaya Ringspot Virus, Pepper Mottle Virus, Potato Leafroll Virus, Potato Virus Y, Tobacco Etch Virus, Watermelon Mosaic Virus 2, Zucchini Yellow Mosaic Virus |
| FLOWERING AND FOLIAGE PLANTS INCLUDING ROSES AND OTHER FLOWERING SHRUBS | Aphids, Adelgids, Eriophyid Mites, Gall Mites, Honey Locust Plant Bug, Lace Bug, Leaf Beetle Larvae, Leafminer (non-larvae), Leafrollers, Mealybugs, Psyllids (immature), Red Mites, Sawfly (larvae), Scales (immature), Spider Mites, Webworms, Whiteflies, Blackspot, Powdery Mildew, Young Caterpillars |
| FOLIAGE ORNAMENTALS & BEDDING PLANTS | Aphids, Adelgids |
| | |
| NON-FRUIT - BEARING TREES - Apple, Cherry, Peach, Pear | Mites, Powdery Mildew |
| SHADE TREES ORNAMENTAL TREES SHRUBS (INCLUDING CONIFERS, DECIDUOUS AND BROADLEAF EVERGREENS & WOODY ORNAMENTALS) | Aphids, Adelgids, Eriophyid Mites, Gall Mites, Hemlock Wooly Adelgids, Honey Locust Plant Bug, Lace Bug, Leaf Beetle Larvae, Leafminer (non-larvae), Leafrollers, Mealybugs, Psyllids (immature), Red Mites, Sawfly (larvae), Scales (immature), Spider Mites, Webworms, Whiteflies, Blackspot, Powdery Mildew, Young CaterpillarsMites |
| Chrysanthemum, Dieffenbachia, Dracaena, Ferns, Gardenias, Geranium, Jade Plant, Palms, Philodendron, Schefflera | Aphids, Leafminers, Mealybugs, Scales, Spider Mites, Whitefly |
| AGERATUM | Aphids, Fungus Gnats, Leafminers, Mealybugs, Scales (soft & hard), Spider Mites, Thrips, Whitefly Powdery Mildew |
| CROWN OF THORNS | |
| DIEFFENBACHIA | |
| DOGWOOD | |
| DRACAENA | |
| FERNS | |
| FICUS | |
| HOLLY | |
| LISIANTHUS | |
| MAGNOLIA | |
| ORCHID | |
| PALMS | |
| PETUNIA | |
| POINSETTIA | |
| SCHEFFLERA | |
| SUNFLOWER | |
| AGLAONEMA | |
| ASTER | |
| AZALEAS | |
| BEGONIAS | |
| BROWALLIA | |
| CAMELLIAS | |
| CARNATION | |
| CELOSIA | |
| CHRYSANTHEMUM | |
| COLEUS | |
| COSMOS | |
| CREPE MYRTLE | |
| DUSTY MILLER | |
| EASTER LILIES | |
| FUCHSIA | |
| GARDENIAS | |
| GERBERA | |
| HELLICHRYSUM | |
| HIBISCUS FOLIAGE | |
| HYDRANGEA | |
| IMPATIENS | |
| JADE PLANT | |
| MARIGOLD | |
| NEW GUINEA | |
| IMPATIENS | |
| NICOTONIA | |
| PHILODENDRON | |
| PORTULACA | |
| REIGER BEGONIAS | |
| SNAPDRAGON | |
| ZINNIAS | |

As used herein, the terms "control" or "controlling" generally refer to preventing, destroying, repelling, or mitigating plant pests.

As used herein, the term "consisting of" signals the exclusion of components other than those following the recitation of "consisting of" from the methods and compositions (e.g., oil-in-water compositions) described herein.

Each occurrence of "substantially free" when used in conjunction with a particular moiety is, independently, defined to mean that the combination, composition, or method does not include a detectable amount of the moiety.

### EXAMPLES

Provided herein are the following examples, which do not limit the scope of the invention described in the claims.

### General Methods - Formulations

Formulations to be used in the following Testing Examples were prepared as follows.

Formulation A was prepared by heating and mixing with a paddle mixer the water and benzoic acid until the benzoic acid was completely dissolved, followed by the addition of the remaining components listed below as indicated using a paddle mixer (no heat) under low shear conditions for a period of several minutes or until the solution became homogeneous and milky in appearance.

### Formulation A

97.95% water
0.05% benzoic acid (preservative)
1.96% N65DW (mineral oil active)
0.04% emulsifier*
*emulsifier is composed of 66% alcohol ethoxylates, 33% alkyl glycerides (CAS 68424-61-3) and 1% water.

Formulation B was prepared by mixing the components listed below as indicated using a paddle mixer under low shear conditions for a period of several minutes or until the solution became homogeneous and milky in appearance.

### Formulation B

97.985% water
0.015% Kathon CG/ICP (preservative)
1.96% N65DW (mineral oil active)
0.04% emulsifier*
*emulsifier is composed of 66% alcohol ethoxylates, 33% alkyl glycerides (CAS 68424-61-3) and 1% water.

Formulation C (no preservative) was prepared by mixing the components listed below as indicated using a paddle mixer under low shear conditions for a period of several minutes or until the solution became homogeneous and milky in appearance.

### Formulation C

98.00% water
1.96% N65DW (mineral oil active)
0.04% emulsifier*
*emulsifier is composed of 66% alcohol ethoxylates, 33% alkyl glycerides (CAS 68424-61-3) and 1% water.

Formulation D was prepared by heating and mixing with a paddle mixer the water and benzoic acid until the benzoic acid was completely dissolved, followed by the addition of the water soluble emulsifier into the aqueous phase with heating and mixing until the solution became transparent. Separately, the oil soluble emulsifier was added into the oil phase and mixed with a paddle mixer until the solution became transparent. The two phases (aqueous and oil phase) were then mixed under high shear conditions (e.g., Polytron or homogenizer) for a period of several minutes or until the solution became homogeneous and milky in appearance.

### Formulation D

97.95% water
0.05% benzoic acid (preservative)
1.96% N65DW (mineral oil active)
0.04% emulsifiers*
*emulsifiers are SYNPERONIC PE/F 127, a polyalkylene oxide block copolymer, and ATLOX 4914, a random polymeric, both from Croda. SYNPERONIC PE/F 127 comprises 30% of the final emulsifier component, and ATLOX 4914 comprises 70% of the final emulsifier component.

### Testing Example 1 - Storage Stability

Storage stability tests involved preparing fresh solutions of the formulations described in the General Methods above and incubating them at 50°C for 4 weeks. This temperature and time frame is meant to represent the equivalent to 2 years at room temperature based on CIPAC MT 46.3. At the end of the 4 week period, samples are assessed for emulsification based on a 1 - 10 scale, with 1 representing no emulsification and 10 representing a homogeneous milky emulsion that is stable for 5 minutes (e.g., minimal creaming).

Freshly prepared samples of Formulations A, B, and C (control) were placed at 50°C for 4 weeks. After 4 weeks, the samples were tested for emulsification with all three samples providing some level of emulsification, however, only Formulation A showed an acceptable emulsion (for commercial use) which did not "break" or release within 30 seconds. This is important for product performance as end-users prefer a solution that can remain stable enough even after some shelf life to apply a uniform amount of active ingredient. As shown below in Examples 3 and 4, although both Formulation B and A provided microbial stability, only Formulation A provided long term emulsification stability as indicated by the ability of Formulation A to effectively re-emulsify after simulated long term storage. As an extreme test, samples of Formulation A, B, or C, were placed at 50°C for 4 weeks and then left at room temperature for an additional year. An emulsification test was performed on these samples and the results are shown in Table 2.

**Table 2. Results of storage stability testing conducted on Formulation A, B and C.**

| **PSG Sample** | **Emulsion Rating (1 - 10)¹** | **Description** |
|---|---|---|
| Formulation C | 5 | Milky emulsion with excessive creaming and oil layer. |
| Formulation B | 3 | Initial milky emulsion which began to clear in 5 min. Excessive creaming in <30 seconds and oil layer. |
| Formulation A | 10 | Homogeneous milky emulsion with minimal creaming. |

| | | |
|---|---|---|
| ¹ Emulsion rating of 0 1 - 10 with 1 = worst (oil on top of solution, oily dispersion, opaque white or clear) and 10 = best (homogeneous milky emulsion with minimal creaming after 5 min). | | |

### Testing Example 2 - Phytotoxicity Testing

Phytotoxicity tests were conducted indoors on tomato plants, and outdoors on tomato, basil, petunia, romaine lettuce, geranium, rose, and cucumber plants, and using the formulations described in the General Methods above. The phytotoxicity tests involved spraying the plants with the test formulations until runoff began to occur. The plants were then monitored for lesion formation (initial water-soaked, oily appearance; leaf collapse/wilt, stunted growth, etc.). Typically, phytotoxicity can be observed within several hours of application, but plants were also monitored for several days after each application. Outdoor applications were applied mid-day when temperatures were >30°C as that is when the plants are at greatest risk of phytotoxicity due to chemical application.

Initial phytotoxicity testing was conducted on tomato plants grown indoors, with all concentrations of benzoic acid tested. Only the 0.05% benzoic acid formulation (Formulation A) provided results comparable to a solution containing no preservative (Formulation C), with the remainder of the formulations causing unacceptable levels of phytotoxicity. Further testing was performed with Formulation A on grape tomato, basil, petunia, romaine lettuce, geranium, rose and cucumber plants grown outdoors. No phytotoxicity was observed on grape tomato, basil, petunia, romaine lettuce, geranium or rose when using Formulation A; however, some minor phytotoxicity was observed on cucumber (comparable to Formulation C). When the amount of mineral oil + emulsifer in solution was reduced to 1%, phytotoxicity was no longer observed with either the 0.05% or the 0% (control) benzoic acid solutions. Interestingly, a second application to young cucumber leaves, which had developed since the first application, caused no phytotoxicity. This may indicate that the plants can be acclimatized to applications of oil in water emulsions, with and without benzoic acid. In addition, tomato plants were sprayed when temperatures were 30°C and no phytotoxicity was observed on flowers, fruits or foliage. On petunia, only minor damage was observed on flowers that had been soaked in Formulation A or C.

**Table 3. Results of phytotoxicity testing with 2% w/w oil in water emulsifier samples containing different levels of the preservative benzoic acid. Testing was conducted both in the lab and on outdoor plants. Solutions were applied until runoff at mid-day when conditions were clear and temperatures were >30°C, with phytotoxicity monitored for up to 4 days post application using a visual scale of 0 - 10.**

| | Phytotoxicity Rating (0 - 10)¹ for Blends Containing BA | | | | | |
|---|---|---|---|---|---|---|
| Plant | No preservative | 0.05% BA | 0.10% BA | 0.15% BA | 0.20% BA | 0.25% BA |
| Tomato (indoor) | 2 | 2 | 5 | 6 | 7 | 9 |
| Tomato (outdoor)² | 2 | 2 | - | - | - | - |
| Basil | 1 | 1 | - | - | - | - |
| Petunia² | 2 | 2 | - | - | - | - |
| Lettuce | 0 | 0 | - | - | - | - |
| Geranium² | 2 | 2 | - | - | - | - |
| Rose | 4 | 4 | - | - | - | - |
| Cucumber³ | 1 | 1 | - | - | - | - |

| | | | | | | |
|---|---|---|---|---|---|---|
| ¹Rating of 0 - 10, where 0 = no damage and 10 = dead plant, with 4 = acceptable level of damage. ²No damage reported on leaves or fruits (tomato), ratings represent minor damage observed on flowers. ³Ratings were taken after 2^{nd} application of benzoic acid formulations. Initial applications at lower temperatures caused some oil spotting on leaves and phytotoxicity ratings of 3. | | | | | | |

### Testing Example 3 - Microbial Stability

In order to test the microbial stability of the formulations, Formulations A, B, C, as well as variations of Formulation A containing different amounts of benzoic acid were evaluated using the anti-microbial preservative effectiveness test (USP-51). The test uses five separate microorganisms (yeast, mold, and bacteria) and monitors the ability of these organisms to grow in the prepared product. In general, there should be at least a 2 log decrease in bacterial counts after 14 days of incubation, with no increase from the 14 days' count at 28 days post inoculation. For yeast and molds, there should be no increase from the initial count at 14 and 28 days post inoculation.

Table 4 highlights the results from the preservative challenge test conducted on freshly prepared solutions of oil in water emulsions containing various amounts benzoic acid (BA), a commercially available preservative Kathon CG/ICP (1.15% 5-chloro-2-methyl-4-isothiazolin-3-one and 0.35% 2-methyl-4-isothiazolin-3-one), or no preservative (Formulation C). The final solutions contained 2% spray oil (98% N65DW + 2% emulsifier) emulsified in water containing the various concentrations of BA or Kathon CG/ICP as indicated in the table. Following inoculation, test samples were incubated at 22.5°C +/- 2.5°C for 28 days, with samples being analysed every 7 days. Oil in water emulsions containing Kathon CG/ICP and benzoic acid at concentrations of 0.05% or greater passed the preservative challenge test.

**Table 4. Results of anti-microbial preservative effectiveness test on oil in water emulsion formulations containing different concentrations of the preservative benzoic acid (BA), as well as a commercially available preservative Kathon CG/ICP.**

| Preservative | *Escherichia coli¹* | *Staphylococcus aureus¹* | *Pseudomonas aeruginosa¹* | *Candida albicans²* | *Aspergillus brasiliensis²* |
|---|---|---|---|---|---|
| 0.015% Kathon | PASS | PASS | PASS | PASS | PASS |
| 0.25% BA | PASS | PASS | PASS | PASS | PASS |
| 0.20% BA | PASS | PASS | PASS | PASS | PASS |
| 0.15% BA | PASS | PASS | PASS | PASS | PASS |
| 0.10% BA | PASS | PASS | PASS | PASS | PASS |
| 0.05% BA | PASS | PASS | PASS | PASS | PASS |
| 0.03% BA | FAIL | PASS | PASS | PASS | PASS |
| 0.01% BA | FAIL | PASS | FAIL | FAIL | PASS |
| 0.005% BA | FAIL | PASS | FAIL | FAIL | PASS |
| 0.001 % BA | FAIL | PASS | FAIL | FAIL | PASS |
| No preservative | FAIL | FAIL | FAIL | FAIL | PASS |

| | | | | | |
|---|---|---|---|---|---|
| ¹PASS = a 2 log decrease in bacterial counts after 14 days of incubation, with no increase from the 14 days' count at 28 days post inoculation. ²PASS = no increase in colony counts from the initial count at 14 and 28 days post inoculation. | | | | | |

### Testing Example 4. Effect of water source on stability

Formulation A was prepared using water from two different sources using the methods described previously. The purpose of this test was to identify whether or not there would be any incompatibilities using different water sources. Based on preliminary testing (storage at 50°C for 4 weeks followed by emulsification), there are no stability or incompatibility issues associated with the different water sources.

### Testing Example 5. Effect of emulsifier amounts on stability or performance

Oil in water emulsion formulations as general described in the General Methods above were also prepared with emulsifier concentrations of 0.02, 0.03, 0.05 and 0.06 wt% (in addition to 0.04 wt% solutions discussed above) emulsifier. Based on preliminary testing (storage at 50°C for 4 weeks followed by emulsification), there are no stability or incompatibility issues associated with the different emulsifier levels. Formulation A (0.04 wt% emulsifier) was found exhibit excellant stability and performance.

### Testing Example 6. Stability Testing

### Solution Preparation

Prior to storage stability testing, new samples of oil-in-water emulsion compositions as generally described in the General Methods above were prepared using different base oils, different biocides and/or different surfactants.

With the exception of sodium benzoate and Kathon CG/ICP, water was preheated to aid in dissolution of various biocides. For example, for dissolution of benzoic acid water was heated to 70°C with constant agitation.

Once biocides were in solution, surfactants were blended into either the biocide/water (or water alone) or oil depending on solubility to provide a final concentration of 0.04 wt%. For example, a mono- and dialkyl glyceride would be blended into the oil component prior to being added to the final oil-in-water emulsion composition, while a polyoxyethylene (4) lauryl ether would be blended into the water component first prior to being added to the final oil-in-water emulsion composition. Where required, solutions were preheated to aid in dissolution of surfactants.

Once the various components had been dissolved into solution, final oil-in-water emulsion composition were blended using high shear mixing (Polytron, Brinkmann Instruments). For solutions containing monomeric surfactants, solutions were subjected to high shear mixing for 5 minutes, while solutions containing polymeric surfactants were subjected to high shear mixing for 15 minutes.

Once blending was completed, samples were assessed for quality of emulsification and then placed at 50°C for up to 70 days, with additional assessments occurring at different time points throughout the storage period. Quality of emulsification was assessed using the method described below. Samples were placed at 50°C to accelerate storage stability testing, as 4 weeks at 50°C is representative of 2 years at ambient temperature (CIPAC MT 46.3).

### Emulsification test

The following method was used to evaluate the tested emulsions. The method was performed using a 100 mL graduated cylinder and a pipette (capable of measuring at least 1 mL).

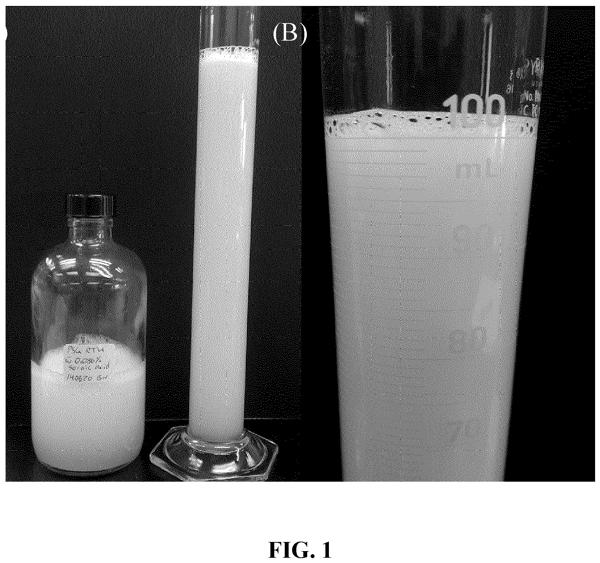

The oil-in-water emulsion compositions evaluated in this example were tested as follows:
1. If ready-to-use spray oil solutions were under storage conditions (e.g., storage for two weeks at 54°C), the solution was shaken to allow the contents to re-emulsify.
2. A graduated cylinder was filled with 100 mL of an oil-in-water emulsion composition, and the amount was adjusted as necessary using a pipette. The test solution was allowed to sit for 15 minutes to permit the emulsion to break and to let the majority of the foam generated in step 1 (Figure 1A) to disappear before moving to step 3. As shown in Figure 1A, with more aggressive mixing, excessive foaming can occur. The foam should be allowed to settle before inverting cylinders. Even with inversion of cylinders (vs. shaking), some foaming can occur (FIG. 1(B)).
3. A stopper was placed on the graduated cylinder and the graduated cylinder was inverted 10 times. It was important to invert and not shake the cylinder to prevent excess foaming.
4. Rate the emulsion within 5 minutes of completing step 3. Rating were based on the following scale (1 - 10).

| **Criteria** | **Emulsion Rating** |
|---|---|
| Milky appearance, homogeneous, minimal creaming after 5 minutes | 10 (Best) |
| Milky appearance, homogeneous, creaming and minor coalescence of oil | 5 |
| (droplets) | |
| Oil on top of solution, oily dispersion, opaque white or clear | 1 (Worst) |

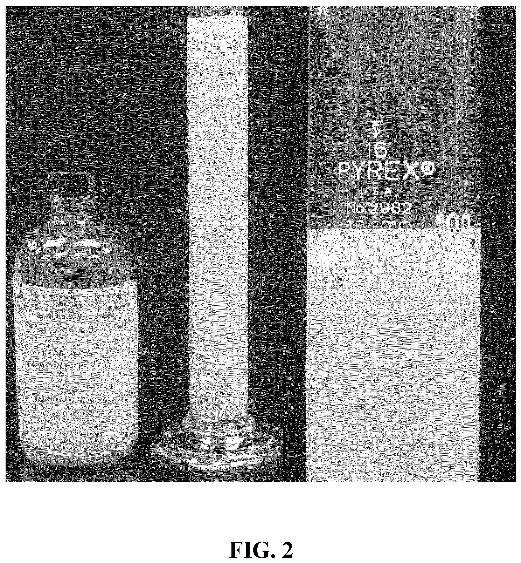

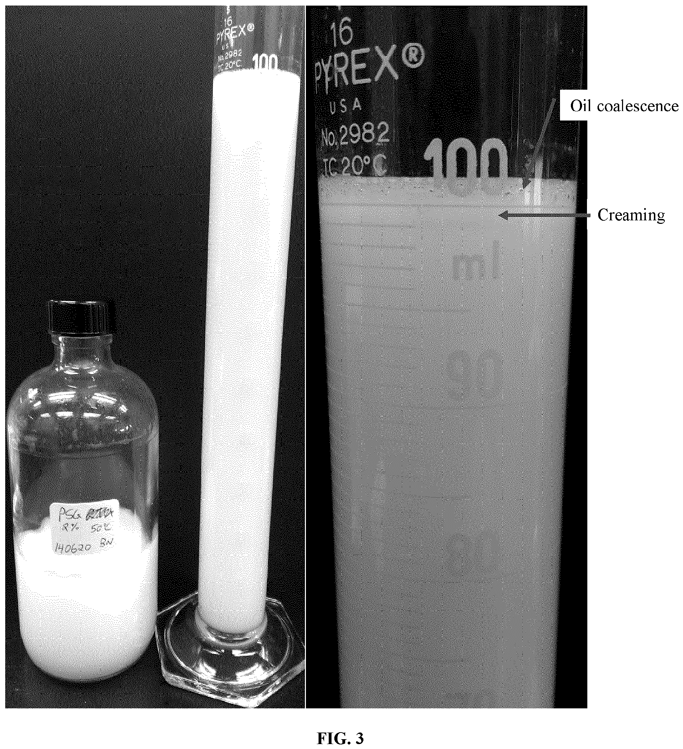

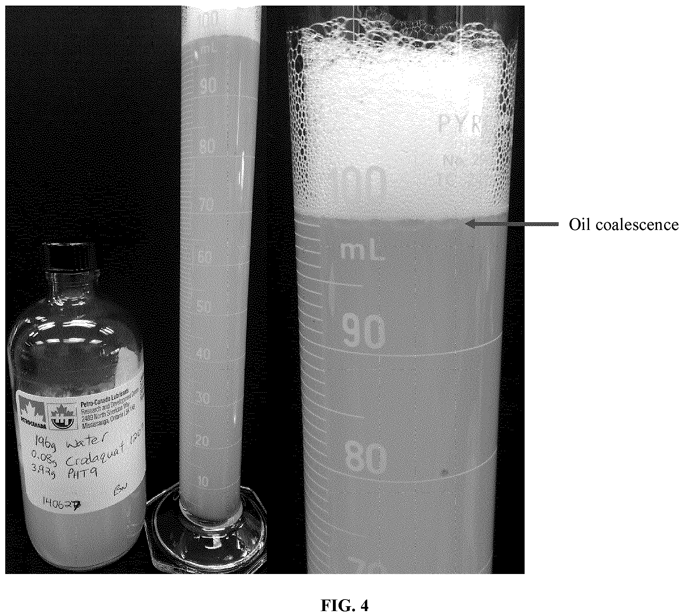

Figures 2-4 illustrate exemplary formulations that can be used as a guideline to determine the emulsification rating in step 4. Specifically, Figure 2 is an example of an oil-in-water emulsion composition with a rating of 10 (best) at five minutes after inversion. The solution is a homogeneous, milky emulsion (left) and lacks an oil layer or creaming on the surface (right). Figure 3 is an example of an oil-in-water emulsion composition with a rating of 5 at five minutes after inversion. The solution is a homogeneous, milky emulsion (left), but with creaming and some oil coalescence on surface (right). Finally, Figure 4 is an example of an oil-in-water emulsion composition with a rating of 1 (worst) at five minutes after inversion. The solution has a cloudy appearance, lacks a homogeneous, milky emulsion (left), and has a layer of large, coalesced oil deposits at the surface of the solution (right). The figures were used in the examples described herein as a reference only.

### Comparison of Biocides

The addition of benzoic acid, methyl paraben, propyl paraben or sodium benzoate allowed for improved re-emulsification after storage at temperatures of 50°C for 32 and 70 days (Table 5). Kathon CG/ICP (5-chloro-2-methyl-4-isothiazolin-3-one and 2-methyl-4-isothiazolin-3-one) at 0.015 wt% or 0.10 wt%, or sorbic acid allowed for comparable or worse emulsification quality than the oil-in-water emulsion composition with no biocide. This indicates that benzoic acid, methyl paraben, propyl paraben and sodium benzoate can allow for improved re-emulsification of oil-in-water emulsion compositions after simulated long term storage, while the addition of sorbic acid and Kathon CG/ICP provided unacceptable results.

**Table 5. Results of emulsion testing on oil-in-water emulsion compositions containing biocides following simulated long term storage at 50°C. Emulsion ratings were determined following the storage time indicated to determine the ability of biocides to aid in reconstitution of the oil-in-water emulsion following long term storage.**

| **Biocide** | Base Oil | Surfactants | Days of Storage (50°C) | Emulsion Rating (1 - 10) |
|---|---|---|---|---|
| **None (control)** | Group III | Alcohol ethoxylate/alkyl glyceride | 70 | 4 |
| **Benzoic acid** | Group III | Alcohol ethoxylate/alkyl glyceride | 70 | 7 |
| **Sodium benzoate** | Group III | Alcohol ethoxylate/alkyl glyceride | 70 | **6** |
| **Methyl paraben** | Group III | Alcohol ethoxylate/alkyl glyceride | 70 | **5** |
| **Propyl paraben** | Group III | Alcohol ethoxylate/alkyl glyceride | 70 | **5** |

### Comparison of Base Oils

The addition of benzoic acid allowed for improved re-emulsification of oil-in-water emulsion compositions containing group I, group II, group III, and group IV (poly-alpha-olefins) base oils compared to oil-in-water emulsion compositions without benzoic acid (Table 6). Base oils were grouped according to the base oil definitions outlined by the American Petroleum Institute. This indicates that benzoic acid is suitable for use in improving the re-emulsification of oil-in-water emulsion compositions containing different grades of base oils after long term storage.

**Table 6. Results of emulsion testing on oil-in-water emulsion compositions containing different base oils, with or without benzoic acid as a biocide. Samples were subjected to simulated long term storage at 50°C, with emulsion ratings being conducted following the storage time indicated.**

| Biocide | **Base Oil*** | Surfactants | Days of Storage (50°C) | Emulsion Rating (1 - 10) |
|---|---|---|---|---|
| None | **Group I** | Alcohol ethoxylate/alkyl glyceride | 70 | 2 |
| Benzoic | **Group I** | Alcohol ethoxylate/alkyl | 70 | 6 |
| acid | | glyceride | | |
| None | **Group II** | Alcohol ethoxylate/alkyl glyceride | 70 | 5 |
| Benzoic acid | **Group II** | Alcohol ethoxylate/alkyl glyceride | 70 | 7 |
| None | **Group III** | Alcohol ethoxylate/alkyl glyceride | 70 | 4 |
| Benzoic acid | **Group III** | Alcohol ethoxylate/alkyl glyceride | 70 | 7 |
| None | **Group IV** | Alcohol ethoxylate/alkyl glyceride | 70 | 4 |
| Benzoic acid | **Group IV** | Alcohol ethoxylate/alkyl glyceride | 70 | 6 |

| | | | | |
|---|---|---|---|---|
| *Base oils were grouped according to the base oil definitions outlined by the American Petroleum Institute. | | | | |

### Comparison of Single Emulsifier/Surfactant Oil-in-Water Emulsion Compositions

The addition of benzoic acid improved re-emulsification of oil-in-water emulsion compositions that contained a block copolymer or alkyl polysaccharide surfactant (Table 7), had no impact on the ability to re-emulsify oil-in-water emulsion compositions that contained an alcohol ethoxylate, an amine alkybenzenesulfonate (anionic), a polyoxyethylene amine quarternary (cationic) or a polyethylene glycol. Oil-in-water emulsion compositions that contained an alkyl glyceride, a random polymeric, a sorbitan monooleate, a sorbitan fatty acid ester, or dodecyl phenol seemed to be negatively affected by the addition of benzoic acid. This indicates that benzoic acid improved re-emulsification of oil-in-water emulsion compositions containing non-ionic surfactants such as block copolymers and alkyl polysaccharides after long term storage.

**Table 7. Results of emulsion testing on oil-in-water emulsion compositions containing single surfactants, with or without benzoic acid as a biocide. Samples were subjected to long term storage at 50°C, with emulsion ratings being conducted following the storage time indicated. Results are shown for solutions where benzoic acid improved the ability to re-emulsify solutions after simulated long term storage.**

| Biocide | Base Oil | **Surfactant** | Days of Storage (50°C) | Emulsion Rating (1 - 10) |
|---|---|---|---|---|
| None | Group III | **Block copolymer** | 27 | 6 |
| Benzoic acid | Group III | **Block copolymer** | 27 | **8** |
| None | Group III | **Alkyl polysaccharide** | 27 | 3 |
| Benzoic acid | Group III | **Alkyl polysaccharide** | 27 | **8** |

### Comparison of Emulsifier/Surfactant Pairs in Oil-in-Water Emulsion Compositions

The addition of benzoic acid allowed for improved re-emulsification of oil-in-water emulsion compositions that contained an emulsifier blend of a random polymeric and a block copolymer after 64 days of storage, a blend of a polyoxyethylene amine quarternary and an alkyl glyceride after 27 days of storage at 50° C, as well as an emulsifier blend of an alcohol ethoxylate and an alkyl glyceride after 70 days of storage at 50° C (Table 8). The addition of benzoic acid had no impact on the ability to re-emulsify oil-in-water emulsion compositions that contained a blend of a dodecyl phenol and an alcohol ethoxylate, an alcohol ethoxylate and an amine alkylbenzenesulfonate (anionic), or a sorbitan monooleate and a polyoxyethylene (20) sorbitan monooleate. Oil-in-water emulsion compositions that contained a blend of a polyethylene glycol monostearate and an alkyl glyceride, as well solutions with an alkyl polysaccharide and an alkyl glyceride seemed to be negatively affected by the addition of benzoic acid. This indicates that benzoic acid improved re-emulsification of oil-in-water emulsion compositions containing blends of non-ionics and cationics, specific examples could include block copolymers and random polymerics, polyoxyethylene amine quarternary and alkyl glycerides, and alcohol ethoxylates and alkyl glycerides. It is reasonable to assume that other blends of non-ionic and cationic surfactants would also be improved by the addition of benzoic acid.

**Table 8. Results of emulsion testing on oil-in-water emulsion compositions containing different surfactant combinations, with or without benzoic acid as a biocide. Samples were subjected to simulated long term storage at 50°C, with emulsion ratings being conducted following the storage time indicated. Results are shown for solutions where benzoic acid improved the ability to re-emulsify solutions after simulated long term storage.**

| Biocide | Base Oil | **Surfactants** | Days of Storage (50°C) | Emulsion Rating (1 - 10) |
|---|---|---|---|---|
| None | Group III | **Alcohol ethoxylate/alkyl glyceride** | 70 | 4 |
| Benzoic acid | Group III | **Alcohol ethoxylate/alkyl glyceride** | 70 | 7 |
| None | Group III | **Random polymeric/Block copolymer** | 64 | 2 |
| Benzoic acid | Group III | **Random polymeric/Block copolymer** | 64 | 5 |
| None | Group III | **Polyoxyethylene amine quarternary/alkyl glyceride** | 27 | 2 |
| Benzoic acid | Group III | **Polyoxyethylene amine quarternary/alkyl glyceride** | 27 | 4 |

### Final Summary

The addition of benzoic acid to oil-in-water emulsion compositions (oil + emulsifier diluted in water) allowed for improved re-emulsification of solutions containing a range of surfactants, both non-ionic and cationic. Improved re-emulsification was also observed when benzoic acid was added to oil-in-water emulsions containing different base oils. In addition, esters of parahydroxybenzoic acid and a sodium salt of benzoic acid allowed for improved re-emulsification of oil-in-water emulsion compositions after long term storage.

## Claims

1. A sprayable oil-in-water quick break emulsion composition, for application to a plant to control plant pests, the oil-in-water quick break emulsion composition comprising:
a paraffinic oil;
an emulsifier comprising a block copolymer emulsifier, an alkyl polysaccharide emulsifier, a blend of a random polymeric emulsifier and a block copolymer emulsifier, a blend of a polyoxyethylene quaternary amine emulsifier and an alkyl glyceride emulsifier or a blend of an alcohol ethoxylate emulsifier and an alkyl glyceride emulsifier;
0.01% to 0.1% by weight of a stabilizer selected from the group consisting of a benzoic acid, a benzoic acid salt, 2-aminobenzoate, 3-aminobenzoate, 4-aminobenzoate, a paraben, and mixtures of two or more thereof; and
water.

2. The composition of claim 1, wherein the emulsifier is a blend of an alcohol ethoxylate emulsifier and an alkyl glyceride emulsifier.

3. The composition of claim 1 or 2, wherein the composition comprises 0.03% to 0.1% by weight of the stabilizer.

4. The composition of any one of claims 1 to 3, wherein the composition comprises 0.05% by weight of the stabilizer.

5. The composition of any one of claims 1 to 4, wherein the stabilizer comprises a benzoic acid.

6. The composition of any one of claims 1 to 5, wherein the composition comprises less than 2% by weight of the emulsifier.

7. The composition of any one of claims 1 to 6, wherein the composition comprises less than 0.5% by weight of the emulsifier.

8. The composition of any one of claims 1 to 7, wherein the composition comprises from 0.01% to 0.1% by weight of the emulsifier.

9. The composition of any one of claims 1 to 8, wherein the composition comprises 0.05% to 5% by weight of the paraffinic oil.

10. The composition of any one of claims 1 to 9, wherein the composition comprises 1% to 3% by weight of the paraffinic oil.

11. The composition of any one of claims 1 to 10, wherein the weight ratio of the paraffinic oil to the emulsifier is from 95:5 to 99.95:0.05.

12. The composition of any one of claims 1 to 11, wherein the paraffinic oil has a paraffin content of at least 80%.

13. The composition of any one of claims 1 to 12, wherein the paraffinic oil has a paraffin content of at least 90%.

14. The composition of any one of claims 1 to 13, wherein the paraffinic oil has a paraffin content of at least 99%.

15. The composition of any one of claims 1 to 14, wherein the paraffinic oil is selected from the group consisting of paraffins, isoparaffins, and mixtures thereof.

16. A method for stabilizing a quick break oil-in-water emulsion composition, for spray application to a plant to control plant pests, wherein stabilizing the quick break oil-in-water emulsion composition comprises allowing reconstitution of the emulsion after storage, the oil-in-water quick break emulsion composition comprising water, a paraffinic oil and an emulsifier comprising a block copolymer emulsifier, an alkyl polysaccharide emulsifier, a blend of a random polymeric emulsifier and a block copolymer emulsifier, a blend of a polyoxyethylene quaternary amine emulsifier and an alkyl glyceride emulsifier or a blend of an alcohol ethoxylate emulsifier and an alkyl glyceride emulsifier, the method comprising adding to the oil-in-water quick break emulsion composition 0.01% to 0.1% by weight of a stabilizer selected from the group consisting of a benzoic acid, a benzoic acid salt, 2-aminobenzoate, 3-aminobenzoate, 4-aminobenzoate, a paraben, and mixtures of two or more thereof,
wherein the oil-in-water quick break emulsion composition is stabilized by allowing reconstitution of the composition after storage.

17. The method of claim 16, wherein the emulsifier is a blend of an alcohol ethoxylate emulsifier and an alkyl glyceride emulsifier.

18. The method of claim 16 or 17, wherein the emulsion is able to be reconstituted after a storage period of at least six months at 25°C.

19. The method of any one of claims 16 to 18, wherein the emulsion is able to be reconstituted after a storage period of at least one year at 25°C.

20. The method of any one of claims 16 to 19, wherein the emulsion is able to be reconstituted after a storage period of at least two years at 25°C.

21. The method of any one of claims 16 to 20, wherein the emulsion is able to be reconstituted after a storage period of at least three years at 25°C.

22. The method of any one of claims 16 to 21, wherein the composition comprises less than 2% by weight of the emulsifier.

23. The method of claim 22, wherein the composition comprises less than 0.5% by weight of the emulsifier.

24. The method of claim 22 or 23, wherein the composition comprises from 0.01% to 0.1% by weight of the emulsifier.

25. The method of any one of claims 16 to 24, wherein the composition comprises 0.03% to 0.1% by weight of the stabilizer.

26. The method of any one of claims 16 to 25, wherein the composition comprises 0.05% by weight of the stabilizer.

27. The method of any one of claims 16 to 26, wherein the stabilizer comprises a benzoic acid.

28. The method of any one of claims 16 to 27, wherein the composition exhibits reduced microbial growth as compared to a similarly formulated composition lacking the stabilizer.

29. The method of any one of claims 16 to 27, wherein the composition does not exhibit increased phytotoxicity as compared to a similarly formulated composition lacking the stabilizer, following application of the composition to the plant.

30. A method for controlling a plant pest, comprising:
applying to a plant a quick break oil-in-water emulsion composition, the oil-in-water quick break emulsion composition comprising:
a paraffinic oil;
a emulsifier comprising a block copolymer emulsifier, an alkyl polysaccharide emulsifier, a blend of a random polymeric emulsifier and a block copolymer emulsifier, a blend of a polyoxyethylene quaternary amine emulsifier and an alkyl glyceride emulsifier or a blend of an alcohol ethoxylate emulsifier and an alkyl glyceride emulsifier;
0.01% to 0.1% by weight of a stabilizer selected from the group consisting of a benzoic acid, a benzoic acid salt, 2-aminobenzoate, 3-aminobenzoate, 4-aminobenzoate, a paraben, and mixtures of two or more thereof; and water;
wherein the plant pest is selected from the group consisting of an insect, a fungus, and a microorganism.

31. The method of claim 30, wherein the emulsifier is a blend of an alcohol ethoxylate emulsifier and an alkyl glyceride emulsifier.

32. The sprayable oil-in-water quick break emulsion composition of any one of claims 1 to 15, the method of any one of claims 16 to 29 and the method of claim 30 or 31, wherein the plant is a turfgrass.

## Patentansprüche

1. Sprühbare Öl-in-Wasser-Quick-Break-Emulsionszusammensetzung zur Anwendung auf einer Pflanze zur Bekämpfung von Pflanzenschädlingen, wobei die Öl-in-Wasser-Quick-Break-Emulsionszusammensetzung Folgendes umfasst:
ein paraffinisches Öl;
einen Emulgator, der einen Blockcopolymer-Emulgator, einen Alkylpolysaccharid-Emulgator, eine Mischung eines statistischen polymeren Emulgators und eines Blockcopolymer-Emulgators, eine Mischung eines Polyoxyethylen-(quartäres-Amin)-Emulgators und eines Alkylglycerid-Emulgators oder eine Mischung eines Alkoholethoxylat-Emulgators und eines Alkylglycerid-Emulgators umfasst;
0,01 Gew.-% bis 0,1 Gew.-% eines Stabilisators ausgewählt aus der Gruppe bestehend aus einer Benzoesäure, einem Benzoesäuresalz, 2-Aminobenzoat, 3-Aminobenzoat, 4-Aminobenzoat, einem Paraben und Mischungen von zwei oder mehr davon und
Wasser.

2. Zusammensetzung nach Anspruch 1, wobei es sich bei dem Emulgator um eine Mischung eines Alkoholethoxylat-Emulgators und eines Alkylglycerid-Emulgators handelt.

3. Zusammensetzung nach Anspruch 1 oder 2, wobei die Zusammensetzung 0,03 Gew.-% bis 0,1 Gew.-% an Stabilisator umfasst.

4. Zusammensetzung nach einem der Ansprüche 1 bis 3, wobei die Zusammensetzung 0,05 Gew.-% an Stabilisator umfasst.

5. Zusammensetzung nach einem der Ansprüche 1 bis 4, wobei die Zusammensetzung eine Benzoesäure umfasst.

6. Zusammensetzung nach einem der Ansprüche 1 bis 5, wobei die Zusammensetzung weniger als 2 Gew.-% an Emulgator umfasst.

7. Zusammensetzung nach einem der Ansprüche 1 bis 6, wobei die Zusammensetzung weniger als 0,5 Gew.-% an Emulgator umfasst.

8. Zusammensetzung nach einem der Ansprüche 1 bis 7, wobei die Zusammensetzung 0,01 Gew.-% bis 0,1 Gew.-% an Emulgator umfasst.

9. Zusammensetzung nach einem der Ansprüche 1 bis 8, wobei die Zusammensetzung 0,05 Gew.-% bis 5 Gew.-% an paraffinischem Öl umfasst.

10. Zusammensetzung nach einem der Ansprüche 1 bis 9, wobei die Zusammensetzung 1 Gew.-% bis 3 Gew.-% an paraffinischem Öl umfasst.

11. Zusammensetzung nach einem der Ansprüche 1 bis 10, wobei das Gewichtsverhältnis von paraffinischem Öl zu Emulgator 95:5 bis 99,95:0,05 beträgt.

12. Zusammensetzung nach einem der Ansprüche 1 bis 11, wobei das paraffinische Öl einen Paraffingehalt von mindestens 80 % hat.

13. Zusammensetzung nach einem der Ansprüche 1 bis 12, wobei das paraffinische Öl einen Paraffingehalt von mindestens 90 % hat.

14. Zusammensetzung nach einem der Ansprüche 1 bis 13, wobei das paraffinische Öl einen Paraffingehalt von mindestens 99 % hat.

15. Zusammensetzung nach einem der Ansprüche 1 bis 14, wobei das paraffinische Öl aus der aus Paraffinen, Isoparaffinen und Mischungen davon bestehenden Gruppe ausgewählt ist.

16. Verfahren zum Stabilisieren einer Quick-Break-Öl-in-Wasser-Emulsionszusammensetzung zur Sprühanwendung auf eine Pflanze zur Bekämpfung von Pflanzenschädlingen, wobei das Stabilisieren der Quick-Break-Öl-in-Wasser-Emulsionszusammensetzung ein Ermöglichen der Rekonstitution der Emulsion nach der Lagerung umfasst, wobei die Öl-in-Wasser-Quick-Break-Emulsionszusammensetzung Wasser, ein paraffinisches Öl und einen Emulgator, der einen Blockcopolymer-Emulgator, einen Alkylpolysaccharid-Emulgator, eine Mischung eines statistischen polymeren Emulgators und eines Blockcopolymer-Emulgators, eine Mischung eines Polyoxyethylen-(quartäres-Amin)-Emulgators und eines Alkylglycerid-Emulgators oder eine Mischung eines Alkoholethoxylat-Emulgators und eines Alkylglycerid-Emulgators umfasst, umfasst, wobei das Verfahren die Zugabe von 0,01 Gew.-% bis 0,1 Gew.-% eines Stabilisators ausgewählt aus der Gruppe bestehend aus einer Benzoesäure, einem Benzoesäuresalz, 2-Aminobenzoat, 3-Aminobenzoat, 4-Aminobenzoat, einem Paraben und Mischungen von zwei oder mehr davon zu der Öl-in-Wasser-Quick-Break-Emulsionszusammensetzung umfasst,
wobei die Öl-in-Wasser-Quick-Break-Emulsionszusammensetzung stabilisiert wird durch Ermöglichen der Rekonstitution der Zusammensetzung nach der Lagerung.

17. Verfahren nach Anspruch 16, wobei es sich bei dem Emulgator um eine Mischung eines Alkoholethoxylat-Emulgators und eines Alkylglycerid-Emulgators handelt.

18. Verfahren nach Anspruch 16 oder 17, wobei die Emulsion nach einer Lagerungsperiode von mindestens sechs Monaten bei 25 C rekonstituiert werden kann.

19. Verfahren nach einem der Ansprüche 16 bis 18, wobei die Emulsion nach einer Lagerungsperiode von mindestens einem Jahr bei 25 C rekonstituiert werden kann.

20. Verfahren nach einem der Ansprüche 16 bis 19, wobei die Emulsion nach einer Lagerungsperiode von mindestens zwei Jahren bei 25 C rekonstituiert werden kann.

21. Verfahren nach einem der Ansprüche 16 bis 20, wobei die Emulsion nach einer Lagerungsperiode von mindestens drei Jahren bei 25 C rekonstituiert werden kann.

22. Verfahren nach einem der Ansprüche 16 bis 21, wobei die Zusammensetzung weniger als 2 Gew.-% an Emulgator umfasst.

23. Verfahren nach Anspruch 22, wobei die Zusammensetzung weniger als 0,5 Gew.-% an Emulgator umfasst.

24. Verfahren nach Anspruch 22 oder 23, wobei die Zusammensetzung 0,01 Gew.-% bis 0,1 Gew.-% an Emulgator umfasst.

25. Verfahren nach einem der Ansprüche 16 bis 24, wobei die Zusammensetzung 0,03 Gew.-% bis 0,1 Gew.-% an Stabilisator umfasst.

26. Verfahren nach einem der Ansprüche 16 bis 25, wobei die Zusammensetzung 0,05 Gew.-% an Stabilisator umfasst.

27. Verfahren nach einem der Ansprüche 16 bis 26, wobei der Stabilisator eine Benzoesäure umfasst.

28. Verfahren nach einem der Ansprüche 16 bis 27, wobei die Zusammensetzung im Vergleich zu einer ähnlich formulierten Zusammensetzung ohne Stabilisator vermindertes mikrobielles Wachstum zeigt.

29. Verfahren nach einem der Ansprüche 16 bis 27, wobei die Zusammensetzung im Vergleich zu einer ähnlich formulierten Zusammensetzung ohne Stabilisator nach der Anwendung der Zusammensetzung auf der Pflanze keine erhöhte Phytotoxizität zeigt.

30. Verfahren zum Bekämpfen eines Pflanzenschädlings, bei dem man:
eine Quick-Break-Öl-in-Wasser-Emulsionszusammensetzung auf eine Pflanze ausbringt, wobei die Öl-in-Wasser-Quick-Break-Emulsionszusammensetzung Folgendes umfasst:
ein paraffinisches Öl;
einen Emulgator, der einen Blockcopolymer-Emulgator, einen Alkylpolysaccharid-Emulgator, eine Mischung eines statistischen polymeren Emulgators und eines Blockcopolymer-Emulgators, eine Mischung eines Polyoxyethylen-(quartäres-Amin)-Emulgators und eines Alkylglycerid-Emulgators oder eine Mischung eines Alkoholethoxylat-Emulgators und eines Alkylglycerid-Emulgators umfasst;
0,01 Gew.-% bis 0,1 Gew.-% eines Stabilisators ausgewählt aus der Gruppe bestehend aus einer Benzoesäure, einem Benzoesäuresalz, 2-Aminobenzoat, 3-Aminobenzoat, 4-Aminobenzoat, einem Paraben und Mischungen von zwei oder mehr davon und
Wasser;
wobei der Pflanzenschädling aus der aus einem Insekt, einem Pilz und einem Mikroorganismus bestehenden Gruppe ausgewählt ist.

31. Verfahren nach Anspruch 30, wobei es sich bei dem Emulgator um eine Mischung eines Alkoholethoxylat-Emulgators und eines Alkylglycerid-Emulgators handelt.

32. Die sprühbare Öl-in-Wasser-Quick-Break-Emulsionszusammensetzung nach einem der Ansprüche 1 bis 15, das Verfahren nach einem der Ansprüche 16 bis 29 und das Verfahren nach Anspruch 30 oder 31, wobei die Pflanze ein Rasengras ist.

## Revendications

1. Composition d'émulsion pulvérisable huile-dans-eau à effet rupture rapide,pour une application à un végétal pour la lutte contre des organismes nuisibles à des végétaux, la composition d'émulsion huile-dans-eau à effet rupture rapide comprenant :
une huile paraffinique ;
un émulsifiant comprenant un émulsifiant de type copolymère à blocs, un émulsifiant de type alkyl-polysaccharide, un mélange d'un émulsifiant polymérique statistique et d'un émulsifiant de type copolymère à blocs, un mélange d'un émulsifiant de type amine quaternaire de polyoxyéthylène et d'un émulsifiant de type alkyl-glycéride ou un mélange d'un émulsifiant de type éthoxylate d'alcool et d'un émulsifiant de type alkyl-glycéride ;
0,01 % à 0,1 % en poids d'un stabilisant choisi dans le groupe constitué par un acide benzoïque, un sel d'acide benzoïque, un 2-aminobenzoate, un 3-aminobenzoate, un 4-aminobenzoate, un parabène, et des mélanges de deux ou plus de ceux-ci ; et
de l'eau.

2. Composition selon la revendication 1, l'émulsifiant étant un mélange d'un émulsifiant de type éthoxylate d'alcool et d'un émulsifiant de type alkyl-glycéride.

3. Composition selon la revendication 1 ou 2, la composition comprenant 0,03 % à 0,1 % en poids du stabilisant.

4. Composition selon l'une quelconque des revendications 1 à 3, la composition comprenant 0,05 % en poids du stabilisant.

5. Composition selon l'une quelconque des revendications 1 à 4, le stabilisant comprenant un acide benzoïque.

6. Composition selon l'une quelconque des revendications 1 à 5, la composition comprenant moins de 2 % en poids de l'émulsifiant.

7. Composition selon l'une quelconque des revendications 1 à 6, la composition comprenant moins de 0,5 % en poids de l'émulsifiant.

8. Composition selon l'une quelconque des revendications 1 à 7, la composition comprenant de 0,01 % à 0,1 % en poids de l'émulsifiant.

9. Composition selon l'une quelconque des revendications 1 à 8, la composition comprenant 0,05 % à 5 % en poids de l'huile paraffinique.

10. Composition selon l'une quelconque des revendications 1 à 9, la composition comprenant 1 % à 3 % en poids de l'huile paraffinique.

11. Composition selon l'une quelconque des revendications 1 à 10, le rapport en poids de l'huile paraffinique sur l'émulsifiant étant de 95 : 5 à 99,95 : 0,05.

12. Composition selon l'une quelconque des revendications 1 à 11, l'huile paraffinique possédant une teneur en paraffine d'au moins 80 %.

13. Composition selon l'une quelconque des revendications 1 à 12, l'huile paraffinique possédant une teneur en paraffine d'au moins 90 %.

14. Composition selon l'une quelconque des revendications 1 à 13, l'huile paraffinique possédant une teneur en paraffine d'au moins 99 %.

15. Composition selon l'une quelconque des revendications 1 à 14, l'huile paraffinique étant choisie dans le groupe constitué par des paraffines, des isoparaffines et des mélanges de ceux-cis.

16. Procédé pour la stabilisation d'une composition d'émulsion huile-dans-eau à effet rupture rapide, pour une application de pulvérisation à un végétal pour la lutte contre des organismes nuisibles à des végétaux, la stabilisation de la composition d'émulsion huile-dans-eau à effet rupture rapide comprenant le fait de permettre la reconstitution de l'émulsion après stockage, la composition d'émulsion huile-dans-eau à effet rupture rapide comprenant de l'eau, une huile paraffinique et un émulsifiant comprenant un émulsifiant de type copolymère à blocs, un émulsifiant de type alkyl-polysaccharide, un mélange d'un émulsifiant polymérique statistique et d'un émulsifiant de type copolymère à blocs, un mélange d'un émulsifiant de type amine quaternaire de polyoxyéthylène et d'un émulsifiant de type alkyl-glycéride ou un mélange d'un émulsifiant de type éthoxylate d'alcool et d'un émulsifiant de type alkyl-glycéride, le procédé comprenant l'ajout, à la composition d'émulsion huile-dans-eau à effet rupture rapide, de 0,01 % à 0,1 % en poids d'un stabilisant choisi dans le groupe constitué par un acide benzoïque, un sel d'acide benzoïque, un 2-aminobenzoate, un 3-aminobenzoate, un 4-aminobenzoate, un parabène, et des mélanges de deux ou plus de ceux-ci, la composition d'émulsion huile-dans-eau à effet rupture rapide étant stabilisée en permettant la reconstitution de la composition après stockage.

17. Procédé selon la revendication 16, l'émulsifiant étant un mélange d'un émulsifiant de type éthoxylate d'alcool et d'un émulsifiant de type alkyl-glycéride.

18. Procédé selon la revendication 16 ou 17, l'émulsion étant capable d'être reconstituée après une période de stockage d'au moins six mois à 25 °C.

19. Procédé selon l'une quelconque des revendications 16 à 18, l'émulsion étant capable d'être reconstituée après une période de stockage d'au moins un an à 25 °C.

20. Procédé selon l'une quelconque des revendications 16 à 19, l'émulsion étant capable d'être reconstituée après une période de stockage d'au moins deux ans à 25 °C.

21. Procédé selon l'une quelconque des revendications 16 à 20, l'émulsion étant capable d'être reconstituée après une période de stockage d'au moins trois ans à 25 °C.

22. Procédé selon l'une quelconque des revendications 16 à 21, la composition comprenant moins de 2 % en poids de l'émulsifiant.

23. Procédé selon la revendication 22, la composition comprenant moins de 0,5 % en poids de l'émulsifiant.

24. Procédé selon la revendication 22 ou 23, la composition comprenant de 0,01 % à 0,1 % en poids de l'émulsifiant.

25. Procédé selon l'une quelconque des revendications 16 à 24, la composition comprenant 0,03 % à 0,1 % en poids du stabilisant.

26. Procédé selon l'une quelconque des revendications 16 à 25, la composition comprenant 0,05 % en poids du stabilisant.

27. Procédé selon l'une quelconque des revendications 16 à 26, le stabilisant comprenant un acide benzoïque.

28. Procédé selon l'une quelconque des revendications 16 à 27, la composition présentant une croissance microbienne réduite par comparaison avec une composition formulée de manière similaire sans le stabilisant.

29. Procédé selon l'une quelconque des revendications 16 à 27, la composition ne présentant pas une phytotoxicité augmentée par comparaison avec une composition formulée de manière similaire sans le stabilisant, à la suite d'une application de la composition au végétal.

30. Procédé pour la lutte contre un organisme nuisible à des végétaux, comprenant :
l'application à un végétal d'une composition d'émulsion huile-dans-eau à effet rupture rapide, la composition d'émulsion huile-dans-eau à effet rupture rapide comprenant :
une huile paraffinique ;
un émulsifiant comprenant un émulsifiant de type copolymère à blocs, un émulsifiant de type alkyl-polysaccharide, un mélange d'un émulsifiant polymérique statistique et d'un émulsifiant de type copolymère à blocs, un mélange d'un émulsifiant de type amine quaternaire de polyoxyéthylène et d'un émulsifiant de type alkyl-glycéride ou un mélange d'un émulsifiant de type éthoxylate d'alcool et d'un émulsifiant de type alkyl-glycéride ;
0,01 % à 0,1 % en poids d'un stabilisant choisi dans le groupe constitué par un acide benzoïque, un sel d'acide benzoïque, un 2-aminobenzoate, un 3-aminobenzoate, un 4-aminobenzoate, un parabène, et des mélanges de deux ou plus de ceux-ci ; et
de l'eau ;
l'organisme nuisible à des végétaux étant choisi dans le groupe constitué par un insecte, un champignon et un micro-organisme.

31. Procédé selon la revendication 30, l'émulsifiant étant un mélange d'un émulsifiant de type éthoxylate d'alcool et d'un émulsifiant de type alkyl-glycéride.

32. La composition d'émulsion pulvérisable huile-dans-eau à effet rupture rapide selon l'une quelconque des revendications 1 à 15, le procédé selon l'une quelconque des revendications 16 à 29 et le procédé selon la revendication 30 ou 31, le végétal étant du gazon.
